(19) Europäisches Patentamt
European Patent Office
Office européen des brevets

(11) **EP 4 679 882 A1**

(12) **EUROPEAN PATENT APPLICATION**
published in accordance with Art. 153(4) EPC

(43) Date of publication:
**14.01.2026 Bulletin 2026/03**

(21) Application number: **24766460.0**

(22) Date of filing: **06.03.2024**

(51) International Patent Classification (IPC):
*H04W 24/10* (2009.01)

(52) Cooperative Patent Classification (CPC):
**H04W 24/10**

(86) International application number:
**PCT/CN2024/080247**

(87) International publication number:
**WO 2024/183745 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2023 CN 202310217699**
**08.03.2023 CN 202310218649**

(71) Applicant: **Apogee Networks, LLC
Dallas, TX 75201 (US)**

(72) Inventors:
• **WU, Lu
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD AND APPARATUS USED IN NODE FOR WIRELESS COMMUNICATION**

(57) Disclosed in the present application are a method and apparatus used in a node for wireless communication. The method comprises: a first node receiving a first CSI reporting configuration, wherein the first CSI reporting configuration comprises a first RS resource set; receiving a first information block, wherein the first information block is used for indicating a first power control offset; and sending first CSI reporting. A first occasion set comprises at least one transmission occasion of at least a first CSI-RS resource in the first RS resource set that is not later than a CSI reference resource of the first CSI reporting; in the calculation of the first CSI reporting, the ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

FIG. 1A

EP 4 679 882 A1

## Description

### Technical Field

The present application relates to a transmission method and apparatus in a wireless communication system, in particular to measurement scheme and apparatus in a wireless communication system.

### Background Art

Network Energy Saving (NES) is of great significance for environmental sustainability, the reduction of the impact on environment (greenhouse gas emissions), and the saving of operating costs. As 5G (the 5th Generation Partnership Project) becomes more prevalent across industries and geographic regions, much higher data rates are required to handle more advanced services and applications (such as XR), resulting in increasingly dense networks, and the usage of more antennas, greater bandwidth, and more frequency bands. In order to keep the impact of 5G on the environment within a controllable range, new solutions need to be studied to improve network energy saving. Therefore, the 3GPP (3rd Generation Partnership Project) RAN#94 meeting passed a study item (SI) of the "Study on network energy savings", which studies technical enhancements in time domain, frequency domain, spatial domain, power domain, etc.

### Summary of the Invention

In existing systems, UE determines CSI reporting based on a CSI (Channel State Information) reporting configuration and an RS (Reference Signal) resource. In the calculation of CSI reporting, a ratio of PDSCH (Physical Downlink Shared Channel) EPRE (Energy per resource element) to CSI-RS EPRE assumed is used, wherein a relationship between the CSI-RS EPRE and EPRE of a CSI-RS resource used for calculating channel measurement of the CSI reporting, or how to determine the CSI-RS EPRE is a critical problem.

In view of the above, the present application discloses a solution. It should be noted that in the description of the present application, energy saving is only used as a typical application scenario or example; and the technical solution in the present application is also applicable to other scenarios facing similar problems (such as other non-base station energy saving scenarios, including but not limited to capacity enhancement systems, short-range communication systems, unlicensed frequency domain communication, IoT (Internet of Things), URLLC (Ultra Reliable Low Latency Communication) networks, Internet of Vehicles, etc.), and similar technical effects can be achieved. In addition, using a unified solution in different scenarios (including but not limited to base station energy saving scenarios) also helps to reduce hardware complexity and costs. In the absence of conflicts, embodiments and features in the embodiments in a first node of the present application can be applied to a second node, and vice versa.

In particular, the interpretation of the terminologies, nouns, functions, and variables in the present application (if not specifically noted) can refer to the definitions in the specification protocol TS36 series, TS38 series, and TS37 series of 3GPP. If necessary, reference can be made to 3GPP standards TS38.211, TS38.212, TS38.213, TS38.214, TS38.215, TS38.321, TS38.331, TS38.305, TS38.304, and TS37.355 for assisting in understanding the present application.

The present application discloses a method used in a first node for wireless communication, characterized by comprising:

> receiving a first CSI reporting configuration, wherein the first CSI reporting configuration comprises a first RS resource set, and the first RS resource set comprises one or more RS resources;
> receiving a first information block, wherein the first information block is used for indicating a first power control offset; and
> sending first CSI reporting,
> wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, the problems to be solved by the present application comprise: the ratio of the PDSCH EPRE to the CSI-RS EPRE assumed in the calculation of CSI reporting, and the relationship between the CSI-RS EPRE and the EPRE of the CSI-RS resource used for calculating channel measurement of the CSI reporting.

As one embodiment, the advantage of adopting the above method is that the EPRE of the CSI-RS resource used for calculating the channel measurement of the CSI reporting can be flexibly adjusted.

As one embodiment, the advantage of adopting the above method is that the CSI-RS EPRE assumed in the calculation of the CSI reporting is flexibly adjusted, so that the CSI reporting is flexibly adjusted.

As one embodiment, the advantage of adopting the above method is that the accuracy of the CSI reporting is improved, and the system performance is improved.

As one embodiment, the advantage of adopting the above method is that the EPRE of the CSI-RS resource is flexibly adjusted, and the network energy consumption is flexibly regulated.

According to one aspect of the present application, it is characterized in that there is one CSI-RS resource in the first RS resource set that has EPRE that is different from the first CSI-RS EPRE in at least one transmission occasion of the CSI-RS resource in the first occasion set.

According to one aspect of the present application, it is characterized in that EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

According to one aspect of the present application, it is characterized in that the first coefficient is equal to a ratio of a target power control offset to a reference power control offset, the target power control offset is equal to a ratio of the first CSI-RS EPRE to SS/PBCH block EPRE, and the reference power control offset is equal to a ratio of the EPRE in the first transmission occasion of the first CSI-RS resource to the SS/PBCH block EPRE.

According to one aspect of the present application, it is characterized by comprising:

receiving a second information block,
wherein the second information block is used for indicating the target power control offset, and the target power control offset is equal to the ratio of the first CSI-RS EPRE to the SS/PBCH block EPRE.

According to one aspect of the present application, it is characterized by comprising:

receiving a third information block,
wherein the third information block is used for indicating the reference power control offset, and the reference power control offset is equal to a ratio of the EPRE in one transmission occasion of the first CSI-RS resource in the first occasion set to the SS/PBCH block EPRE.

According to one aspect of the present application, it is characterized in that the ratios of EPRE in two transmission occasions respectively of one CSI-RS resource in the first RS resource set to the SS/PBCH block EPRE are respectively indicated.

The present application discloses a method used in a second node for wireless communication, comprising:

sending a first CSI reporting configuration, wherein the first CSI reporting configuration comprises a first RS resource set, and the first RS resource set comprises one or more RS resources; sending a first information block, wherein the first information block is used for indicating a first power control offset; and
receiving the first CSI reporting,
wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

According to one aspect of the present application, it is characterized in that there is one CSI-RS resource in the first RS resource set that has EPRE that is different from the first CSI-RS EPRE in at least one transmission occasion of the CSI-RS resource in the first occasion set.

According to one aspect of the present application, it is characterized in that EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

According to one aspect of the present application, it is characterized in that the first coefficient is equal to the ratio of a target power control offset to a reference power control offset, the target power control offset is equal to the ratio of the first CSI-RS EPRE to the SS/PBCH block EPRE, and the reference power control offset is equal to the ratio of the EPRE in the first transmission occasion of the first CSI-RS resource to the SS/PBCH block EPRE.

According to one aspect of the present application, it is characterized by comprising:

sending a second information block,
wherein the second information block is used for indicating the target power control offset, and the target power control offset is equal to the ratio of the first CSI-RS EPRE to the SS/PBCH block EPRE.

According to one aspect of the present application, it is characterized by comprising:

sending a third information block,
wherein the third information block is used for indicating the reference power control offset, and the reference power control offset is equal to a ratio of the EPRE in one transmission occasion of the first CSI-RS resource in the first occasion set to the SS/PBCH block EPRE.

According to one aspect of the present application, it is characterized in that the ratios of EPRE in two transmission occasions respectively of one CSI-RS resource in the first RS resource set to the SS/PBCH block EPRE are respectively indicated.

The present application discloses a first node device for wireless communication, characterized by comprising:

a first receiver receiving a first CSI reporting configuration, wherein the first CSI reporting configuration comprises a first RS resource set, and the first RS resource set comprises one or more RS resources; and receiving a first information block, wherein the first information block is used for indicating a first power control offset; and
a first transmitter sending first CSI reporting,
wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

The present application discloses a second node device for wireless communication, characterized by comprising:

a second transmitter sending a first CSI reporting configuration, wherein the first CSI reporting configuration comprises a first RS resource set, and the first RS resource set comprises one or more RS resources; and sending a first information block, wherein the first information block is used for indicating a first power control offset; and
a second receiver receiving first CSI reporting,
wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

The present application discloses a method used in a first node for wireless communication, characterized by comprising:

receiving a first CSI reporting configuration, wherein the first CSI reporting configuration comprises a first RS resource set, and the first RS resource set comprises one or more RS resources;
receiving a first information block, wherein the first information block is used for indicating a first power control offset; and
sending first CSI reporting,
wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

As one embodiment, the problem to be solved by the present application comprises: the ratio of the PDSCH EPRE to the CSI-RS EPRE assumed in the calculation of CSI reporting, wherein how to determine the CSI-RS EPRE is a critical problem.

As one embodiment, the advantage of adopting the above method is that the CSI reporting is flexibly adjusted by determining appropriate CSI-RS EPRE.

As one embodiment, the advantage of adopting the above method is that the accuracy of the CSI reporting is improved by determining appropriate CSI-RS EPRE, and the system performance is improved.

According to one aspect of the present application, it is characterized in that there is one RS resource in the first RS resource set that has EPRE that is different in the two transmission occasions of the RS resource in the first occasion set.

As one embodiment, the advantage of adopting the above method is that the CSI-RS EPRE is flexibly adjusted, and the network energy consumption is flexibly regulated.

According to one aspect of the present application, it is characterized in that the first CSI reporting indicates a first CSI-RS resource, and the first CSI-RS resource is one CSI-RS resource in the first RS resource set; and the first CSI-RS EPRE is equal to the maximum EPRE in all transmission occasions of the first CSI-RS resource in the first occasion set, or the first CSI-RS EPRE is equal to the minimum EPRE in all transmission occasions of the first CSI-RS resource in the first occasion set, or the first CSI-RS EPRE is equal to the average EPRE in all transmission occasions of the first CSI-RS resource in the first occasion set.

According to one aspect of the present application, it is characterized in that the first CSI reporting indicates a first CSI-RS resource, the first CSI-RS resource is one RS resource in the first RS resource set, and the first CSI-RS EPRE is equal to EPRE in the most recent transmission occasion of the first CSI-RS resource in the first occasion set.

According to one aspect of the present application, it is characterized in that the first CSI reporting indicates a first CSI-RS resource, the first CSI-RS resource is one RS resource in the first RS resource set, and EPRE in one transmission occasion of the first CSI-RS resource in the first occasion set is different from the first CSI-RS EPRE.

According to one aspect of the present application, it is characterized in that EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

According to one aspect of the present application, it is characterized by comprising:

receiving a second information block,
receiving a third information block,
wherein the second information block and the third information block are respectively used for indicating the ratios of EPRE in two transmission occasions respectively of one CSI-RS resource in the first RS resource set to the SS/PBCH block EPRE.

According to one aspect of the present application, it is characterized in that the first CSI reporting configuration further comprises a second RS resource set, and the second RS resource set comprises one or more RS resources; and a second occasion set comprises a transmission occasion of at least one RS resource in the second RS resource set that is not later than the CSI reference resource of the first CSI reporting, and the second occasion set is used for obtaining interference measurement for calculating the first CSI reporting.

The present application discloses a method used in a second node for wireless communication, comprising:

sending a first CSI reporting configuration, wherein the first CSI reporting configuration comprises a first RS resource set, and the first RS resource set comprises one or more RS resources;
sending a first information block, wherein the first information block is used for indicating a first power control offset; and
receiving the first CSI reporting,
wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

According to one aspect of the present application, it is characterized in that there is one RS resource in the first RS resource set that has EPRE that is different in the two transmission occasions of the RS resource in the first occasion set.

According to one aspect of the present application, it is characterized in that the first CSI reporting indicates a first CSI-RS resource, and the first CSI-RS resource is one CSI-RS resource in the first RS resource set; and the first CSI-RS EPRE is equal to the maximum EPRE in all transmission occasions of the first CSI-RS resource in the first occasion set, or the first CSI-RS EPRE is equal to the minimum EPRE in all transmission occasions of the first CSI-RS resource in the first occasion set, or the first CSI-RS EPRE is equal to the average EPRE in all transmission occasions of the first CSI-RS resource in the first occasion set.

According to one aspect of the present application, it is characterized in that the first CSI reporting indicates a first CSI-RS resource, the first CSI-RS resource is one RS resource in the first RS resource set, and the first CSI-RS EPRE is equal to EPRE in the most recent transmission occasion of the first CSI-RS resource in the first occasion set.

According to one aspect of the present application, it is characterized in that the first CSI reporting indicates a first CSI-RS resource, the first CSI-RS resource is one RS resource in the first RS resource set, and EPRE in one transmission occasion of the first CSI-RS resource in the first occasion set is different from the first CSI-RS EPRE.

According to one aspect of the present application, it is characterized in that EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

According to one aspect of the present application, it is characterized by comprising:

sending a second information block; and sending a third information block,
wherein the second information block and the third information block are respectively used for indicating the ratios of EPRE in two transmission occasions respectively of one CSI-RS resource in the first RS resource set to the SS/PBCH block EPRE.

According to one aspect of the present application, it is characterized in that the first CSI reporting configuration further comprises a second RS resource set, and the second RS resource set comprises one or more RS resources; and a second occasion set comprises a transmission occasion of at least one RS resource in the second RS resource set that is not later than the CSI reference resource of the first CSI reporting, and the second occasion set is used for obtaining interference measurement for calculating the first CSI reporting.

The present application discloses a first node device for wireless communication, characterized by comprising:

a first receiver receiving a first CSI reporting configuration, wherein the first CSI reporting configuration comprises a first RS resource set, and the first RS resource set comprises one or more RS resources; and receiving a first information block, wherein the first information block is used for indicating a first power control offset; and
a first transmitter sending first CSI reporting,
wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

The present application discloses a second node device for wireless communication, characterized by comprising:

a second transmitter sending a first CSI reporting configuration, wherein the first CSI reporting configuration comprises a first RS resource set, and the first RS resource set comprises one or more RS resources; and sending a first information block, wherein the first information block is used for indicating a first power control offset; and
a second receiver receiving first CSI reporting,
wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

As one embodiment, compared with the traditional solution, the present application has the following advantages:

- flexibly adjusting the EPRE of the CSI-RS resource;
- dynamically adjusting the EPRE of the CSI-RS resource;
- flexibly adjusting the CSI-RS EPRE assumed in the calculation of the CSI reporting;
- flexibly adjusting the CSI reporting;
- flexibly regulating the network energy consumption;
- improving the accuracy of the CSI reporting; and
- improving the system performance.

**Brief Description of the Drawings**

Other features, purposes and advantages of the present application will become more apparent from reading the detailed description of the non-limiting embodiments made with reference to the following drawings:

FIG. 1A shows a flowchart of a first CSI reporting configuration, a first information block, and first CSI reporting according to one embodiment of the present application;
FIG. 1B shows a flowchart of a first CSI reporting configuration, a first information block, and first CSI reporting according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5A shows a flowchart of wireless transmission according to one embodiment of the present application;
FIG. 5B shows a flowchart of wireless transmission according to one embodiment of the present application;
FIG. 6A shows a schematic diagram of a relationship between a first RS resource set and a first CSI-RS EPRE according to one embodiment of the present application;
FIG. 6B shows a schematic diagram of EPRE of an RS resource in a first RS resource set according to one embodiment of the present application;
FIG. 7A shows a schematic diagram of a relationship between a calculation of first CSI reporting and a first coefficient according to one embodiment of the present application;
FIGs. 7B-7D respectively show schematic diagrams of a first CSI-RS EPRE according to one embodiment of the present application;
FIG. 8A shows a schematic diagram of a first coefficient according to one embodiment of the present application;
FIG. 8B shows a schematic diagram of a first CSI-RS EPRE according to another embodiment of the present application;
FIG. 9A shows a schematic diagram of EPRE of one CSI-RS resource in a first RS resource set according to one embodiment of the present application;
FIG. 9B shows a schematic diagram of EPRE of a first CSI-RS resource according to one embodiment of the present application;
FIG. 10A shows a schematic diagram of a second RS resource set according to one embodiment of the present application;
FIG. 10B shows a schematic diagram of a second RS resource set according to one embodiment of the present application;
FIG. 10C shows a schematic diagram of a calculation of first CSI reporting according to one embodiment of the present application;
FIG. 11A shows a structural block diagram of a processing apparatus used in a first node device according to one embodiment of the present application;
FIG. 11B shows a structural block diagram of a processing apparatus used in a first node device according to one embodiment of the present application;
FIG. 12A shows a structural block diagram of a processing apparatus used in a second node device according to one embodiment of the present application; and
FIG. 12B shows a structural block diagram of a processing apparatus used in a second node device according to one embodiment of the present application.

**Detailed Description of Embodiments**

The technical solution of the present application will be further described in detail below in conjunction with the accompanying drawings. It should be noted that, in the absence of conflicts, embodiments and features in the embodiments of the present application may be arbitrarily combined with each other.

**Embodiment 1A**

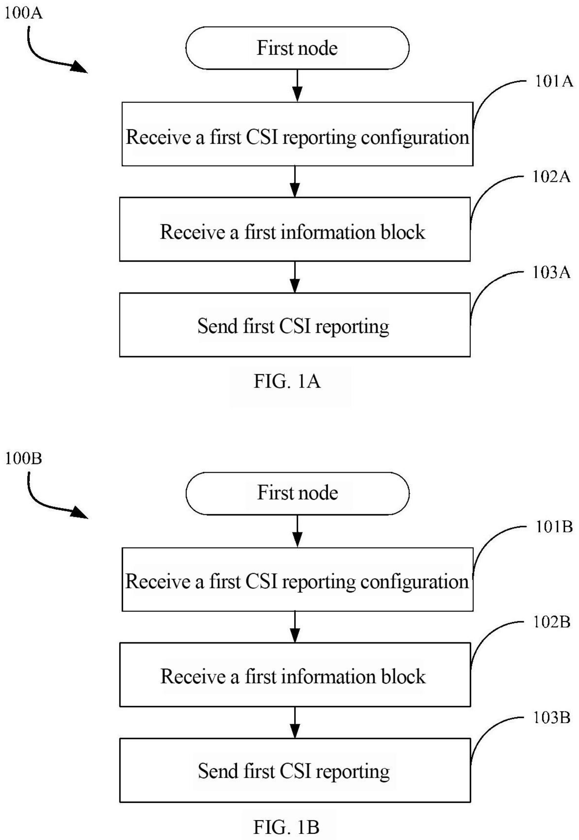

Embodiment 1A shows a flowchart of a first CSI reporting configuration, a first information block, and first CSI reporting according to one embodiment of the present application, as shown in FIG. 1A. In 100 shown in FIG. 1A, each block represents one step.

In Embodiment 1A, the first node in the present application receives a first CSI reporting configuration in step 101A, wherein the first CSI reporting configuration comprises a first RS resource set, and the first RS resource set comprises one or more RS resources; receives a first information block in step 102A, wherein the first information block is used for indicating a first power control offset; and sends first CSI reporting in step 103A, wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, the first CSI (Channel Status Information) reporting configuration is carried by a higher layer signaling.

As one embodiment, the first CSI reporting configuration is carried by an RRC signaling.

As one embodiment, the first CSI reporting configuration comprises one RRC IE (Information Element).

As one embodiment, the first CSI reporting configuration comprises one or more RRC IEs.

As one embodiment, the first CSI reporting configuration is IE CSI-ReportConfig.

As one embodiment, a name of the first CSI reporting configuration comprises CSI-ReportConfig.

As one embodiment, the first CSI reporting configuration comprises one CSI resource configuration, and the one CSI resource configuration is used for configuring the first RS resource set.

As one sub-embodiment of the above embodiment, the one CSI resource configuration is one IE CSI-ResourceConfig.

As one sub-embodiment of the above embodiment, the first CSI reporting configuration comprises a resourcesForChannelMeasurement field, and the resourcesForChannelMeasurement field included in the first CSI reporting configuration indicates the one CSI resource configuration.

As one embodiment, the first CSI reporting configuration comprises a plurality of CSI resource configurations, and one CSI resource configuration in the plurality of CSI resource configurations is used for configuring the first RS resource set.

As one embodiment, the one CSI resource configuration used for configuring the first RS resource set comprises an identifier or index of each RS resource in the first RS resource set.

As one embodiment, the one CSI resource configuration used for configuring the first RS resource set comprises an identifier of each RS resource in the first RS resource set.

As one embodiment, the one CSI resource configuration used for configuring the first RS resource set is used for configuring each RS resource in the first RS resource set.

As one embodiment, the one CSI resource configuration used for configuring the first RS resource set comprises configuration information of each RS resource in the first RS resource set.

As one embodiment, the first CSI reporting configuration comprises a resourcesForChannelMeasurement field, and the resourcesForChannelMeasurement field included in the first CSI reporting configuration is used for indicating the first RS resource set.

As one embodiment, specific definitions of IE CSI-ReportConfig , resourcesForChannelMeasurement, and IE CSI-ResourceConfig refer to Section 6.3.2 of 3GPP TS 38.331.

As one embodiment, the first CSI reporting configuration comprises a reportConfigType field; The reportConfigType field in the first CSI reporting configuration indicates which of the following is the first CSI reporting: periodic, semi-persistent on a PUSCH, semi-persistent on a PUCCH, or aperiodic.

As one embodiment, a channel measurement resource of the first CSI reporting configuration comprises the first RS resource set.

As one embodiment, the first RS resource set is used for channel measurement of the first CSI reporting.

As one embodiment, the first RS resource set comprises one RS resource.

As one embodiment, the first RS resource set comprises a plurality of RS resources.

As one embodiment, the first RS resource set comprises at least one CSI-RS (Channel State Information-Reference Signal) resource.

As one embodiment, the first RS resource set comprises a plurality of CSI-RS resources.

As one embodiment, the first RS resource set comprises one or two of the CSI-RS resource or a SS/PBCH (Synchronization Signal/Physical Broadcast CHannel) block resource.

As one embodiment, any RS resource in the first RS resource set is the CSI-RS resource or the SS/PBCH block resource.

As one embodiment, the first RS resource set comprises one or two of the CSI-RS resource or the SSB resource.

As one embodiment, any RS resource in the first RS resource set is the CSI-RS resource or the SSB resource.

As one embodiment, any RS resource in the first RS resource set is the CSI-RS resource.

As one embodiment, the SSB refers to a Synchronization Signal Block.

As one embodiment, the SSB refers to a Synchronization Signal/Physical Broadcast Channel Block.

Typically, the CSI-RS resource in the present application is an NZP (Non-Zero Power) CSI-RS resource.

As one embodiment, the first RS resource set comprises at least one periodic or semi-persistent CSI-RS resource.

As one embodiment, the first RS resource set comprises at least one periodic CSI-RS resource.

As one embodiment, the first RS resource set comprises at least one semi-persistent CSI-RS resource.

As one embodiment, any RS resource in the first RS resource set is a periodic or semi-persistent CSI-RS resource.

As one embodiment, any RS resource in the first RS resource set is a periodic CSI-RS resource.

As one embodiment, any RS resource in the first RS resource set is a semi-persistent CSI-RS resource.

As one embodiment, a period and a slot offset of the CSI-RS resource in the first RS resource set are configured by a parameter CSI-ResourcePeriodicityAndOffset in a higher layer parameter reportSlotConfig, and a unit of the period of the CSI-RS resource in the first RS resource set is a slot.

As one embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"notConfigured"*.

As one embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"configured"*.

As one embodiment, the CSI reference resource of the first CSI reporting is a frequency domain resource targeted by the first CSI reporting on a frequency domain.

As one embodiment, the CSI reference resource of the first CSI reporting is a subband or broadband targeted by the first CSI reporting on a frequency domain.

As one embodiment, the CSI reference resource of the first CSI reporting and a frequency domain resource targeted by the first CSI reporting belong to the same BWP (Bandwidth Part) on a frequency domain.

As one embodiment, the CSI reference resource of the first CSI reporting is a first downlink slot on a time domain, the first downlink slot depends on a second uplink slot, and the second uplink slot is an uplink slot that sends the first CSI reporting.

As one embodiment, the CSI reference resource of the first CSI reporting is a first downlink slot on a time domain.

As one embodiment, the CSI reference resource of the first CSI reporting is a downlink slot.

As one embodiment, the CSI reference resource of the first CSI reporting depends on a second uplink slot.

As one embodiment, the first downlink slot depends on a second uplink slot.

As one embodiment, the second uplink slot is an uplink slot $n'$.

As one embodiment, the second uplink slot is an uplink slot that sends the first CSI reporting.

As one embodiment, the second uplink slot is an uplink slot where the PUCCH carrying the first CSI reporting is located.

As one embodiment, the second uplink slot is an uplink slot where the PUSCH carrying the first CSI reporting is located.

As one embodiment, the description of the CSI reference resource of the first CSI reporting refers to Section 5.2.2.5 of 3GPP TS38.214.

As one embodiment, the first downlink slot is a downlink slot $n - n_{CSI\_ref} - K_{offset} \cdot \frac{2^{\mu_{DL}}}{2^{\mu_{K_{offset}}}}$, wherein $K_{offset}$ is configured by a higher layer signaling, and $\mu_{K_{offset}}$ is a subcarrier spacing configuration of the $K_{offset}$.

As one embodiment, $n_{CSI\_ref}$ is a minimum value not less than $4 \cdot 2^{\mu_{DL}}$.

As one embodiment, $n_{CSI\_ref}$ is a minimum value not less than $5 \cdot 2^{\mu_{DL}}$.

As one embodiment, the n is the sum of a first component and a second component.

As one embodiment, the first component is one integer.

As one embodiment, the first component is $\left\lfloor n' \cdot \frac{2^{\mu_{DL}}}{2^{\mu_{UL}}} \right\rfloor$, wherein $\mu_{DL}$ and $\mu_{UL}$ are downlink and uplink subcarrier spacing configurations, respectively, and $\lfloor x \rfloor$ represents a down rounding operation performed on $x$.

As one embodiment, the second component is one integer.

As one embodiment, the second component is $\left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$, wherein $N_{slot,\,offset}^{CA}$ and $\mu_{offset}$ are configured by a higher layer parameter ca-SlotOffset, and for detailed description, refer to section 4.5 of 3GPP TS38.211.

As one embodiment, the $n$ is $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$.

As one embodiment, the first downlink slot is a downlink slot $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}}$.

As one embodiment, the first CSI reporting configuration is used for configuring one aperiodic CSI reporting, and the first CSI reporting is the one aperiodic CSI reporting configured by the first CSI reporting configuration.

As one embodiment, the first CSI reporting configuration is used for configuring one periodic or semi-persistent CSI reporting, and the first CSI reporting is a reporting instance of the periodic or semi-persistent CSI reporting configured by the first CSI reporting configuration.

As one embodiment, the first CSI reporting configuration is used for configuring one periodic CSI reporting, and the first CSI reporting is a reporting instance of the periodic CSI reporting configured by the first CSI reporting configuration.

As one embodiment, the first CSI reporting configuration is used for configuring one semi-persistent CSI reporting, and the first CSI reporting is a reporting instance of the semi-persistent CSI reporting configured by the first CSI reporting configuration.

As one embodiment, the first CSI reporting is transmitted on a physical channel.

As one embodiment, the first CSI reporting is transmitted on a PUSCH (Physical Uplink Shared Channel).

As one embodiment, the first CSI reporting is transmitted on a PUCCH (Physical Uplink Control Channel).

As one embodiment, the first CSI reporting is periodic or semi-persistent.

As one embodiment, the first CSI reporting is semi-persistent, and the first CSI reporting is activated by one MAC CE.

As one embodiment, a name of the MAC CE that activates the first CSI reporting comprises SP CSI reporting on PUCCH Activation MAC CE.

As one embodiment, the first CSI reporting is aperiodic, the first CSI reporting is triggered by one piece of DCI (Downlink Control Information), the one piece of DCI comprises a CSI request field, and the CSI request field of the one piece of DCI is used for indicating one trigger state, and the one trigger state indicates the first CSI reporting configuration.

As one embodiment, the first CSI reporting is semi-persistent, and when the first node receives one activation command, the first node sends the first CSI reporting on the PUCCH.

As one embodiment, the one activation command comprises SP CSI reporting on PUCCH Activation MAC CE.

As one embodiment, the first CSI reporting is semi-persistent, and when the first node is triggered by the one piece of DCI, the first node sends the first CSI reporting on the PUSCH.

As one embodiment, at least one RS resource in the first RS resource set is used in an energy saving mode of the second node.

As one embodiment, the at least one RS resource in the first RS resource set is used in an energy saving mode of a cell.

As one embodiment, the first CSI reporting configuration further indicates a report quantity included in the first CSI reporting.

As one embodiment, the first CSI reporting configuration comprises a reportQuantity field, and the field in the first CSI reporting configuration indicates a report quantity included in the first CSI reporting.

As one embodiment, the report quantity included in the first CSI reporting comprises at least a CRI among the CRI (CSI-RS Resource Indicator), a CQI (Channel Quality Indicator), a PMI (Precoding Matrix Indicator), an SSBRI (SS/PBCH Block Resource Indicator), an LI (Layer Indicator), an RI (Rank Indicator), an L1-RSRP (Layer 1 Reference Signal Received Power), or an L1-SINR (Layer 1 Signal-to-Noise and Interference Ratio), and the CRI included in the first CSI reporting is used for indicating the first CSI-RS resource.

As one embodiment, the first CSI reporting comprises a CRI and an L1-RSRP.

As one embodiment, the first CSI reporting comprises a CRI and an L1-SINR.

As one embodiment, the first CSI reporting comprises at least a CRI.

As one embodiment, the first CSI reporting comprises at least a CRI and a CQI.

As one embodiment, the first CSI reporting comprises a CRI, an RI, a PMI, and a CQI.

As one embodiment, the first CSI reporting comprises a CRI, an RI, an LI, a PMI, and a CQI.

As one embodiment, the first CSI reporting comprises a CRI, an RI, and a PMI.

As one embodiment, the first CSI reporting comprises a CRI, an RI, and a CQI.

As one embodiment, the first CSI reporting comprises a CRI and an RSRP.

As one embodiment, the first CSI reporting comprises a CRI and an L1-RSRP.

As one embodiment, the first CSI reporting comprises a CRI and an L1-SINR.

As one embodiment, the first CSI reporting comprises at least a CRI, and the CRI included in the first CSI reporting is used for indicating the first CSI-RS resource, wherein the first CSI-RS resource is one RS resource in the first RS resource set.

As one embodiment, the first CSI reporting configuration comprises a higher layer parameter timeRestriction-ForChannelMeasurements, and the higher layer parameter timeRestrictionForChannelMeasurements in the first CSI reporting configuration is set to "notConfigured".

As one embodiment, the first power control offset is a non-negative real number.

As one embodiment, the first power control offset is a positive real number.

As one embodiment, the dB (deciBel) value of the first power control offset is an integer not less than -8 and not greater than 15.

Typically, the first power control offset is $a$, and the dB value of the first power control offset is $10log_{10}(a)$.

Typically, the unit of the dB value of the first power control offset is dB.

As one embodiment, the first information block is carried by an RRC signaling.

As one embodiment, the first information block comprises part or all of the fields in one RRC IE.

As one embodiment, the first information block comprises part of the fields in one RRC IE.

As one embodiment, the first information block comprises a powerControlOffset field in IE NZP-CSI-RS-Resource.

As one embodiment, the first information block comprises part of the fields in IE NZP-CSI-RS-Resource.

As one embodiment, the first information block comprises a higher layer parameter powerControlOffset.

As one embodiment, the name of the first information block comprises powerControlOffset.

As one embodiment, the name of the first information block comprises power.

As one embodiment, the first CSI reporting configuration and the first information block are received simultaneously.

As one embodiment, the first CSI reporting configuration and the first information block are carried by the same RRC signaling.

As one embodiment, the first power control offset belongs to configuration information of the first CSI-RS resource.

As one embodiment, the first CSI reporting indicates the first CSI-RS resource, and the first power control offset belongs to configuration information of the first CSI-RS resource.

As one embodiment, the first CSI reporting comprises at least a CRI, and the CRI included in the first CSI reporting is used for indicating the first CSI-RS resource, wherein the first CSI-RS resource is one RS resource in the first RS resource set.

As one embodiment, the first information block is carried by an MAC CE signaling.

As one embodiment, the first information block is borne by a physical layer signaling.

As one embodiment, the first information block is carried by a DCI signaling.

As one embodiment, the first information block comprises one field in one piece of DCI.

As one embodiment, the first information block comprises one or more fields in one piece of DCI.

As one embodiment, the first information block comprises a CSI request field in one piece of DCI.

As one embodiment, the first information block comprises at least one field different from the CSI request field in one piece of DCI.

As one embodiment, the first information block comprises a CSI request field and at least one field different from the CSI request field in one piece of DCI.

As one embodiment, the first CSI reporting is aperiodic, the first CSI reporting is triggered by one piece of DCI, and the one piece of DCI comprises the first information block.

As one sub-embodiment of this embodiment, the first information block comprises a CSI request field in the one piece of DCI.

As one sub-embodiment of this embodiment, the first information block comprises at least one field different from the CSI request field in the one piece of DCI.

As one sub-embodiment of this embodiment, the first information block comprises a CSI request field in the one piece of DCI and at least one field different from the CSI request field in the one piece of DCI.

As one embodiment, the first CSI reporting is aperiodic, the first CSI reporting is triggered by one piece of DCI, the one piece of DCI comprises the first information block, the first information block is a CSI request field, the first information block of the one piece of DCI is used for indicating a trigger state, and the one trigger state indicates the first CSI reporting configuration.

As one embodiment, the first power control offset is the ratio of PDSCH (Physical Downlink Shared Channel) EPRE (Energy per resource element) configured for the first CSI-RS resource to NZP CSI-RS EPRE.

As one embodiment, the first power control offset is the ratio of PDSCH EPRE to NZP CSI-RS EPRE when the UE derives CSI feedback.

As one sub-embodiment of the above embodiment, "the first power control offset is the ratio of PDSCH EPRE to NZP CSI-RS EPRE when the UE derives CSI feedback" means that the first power control offset is the ratio of PDSCH EPRE to NZP CSI-RS EPRE assumed when the UE derives CSI feedback.

As one embodiment, the configuration information of any CSI-RS resource in the first RS resource set comprises a power offset indicating the ratio of PDSCH EPRE to NZP CSI-RS EPRE.

As one embodiment, a power offset indicating the ratio of PDSCH EPRE to NZP CSI-RS EPRE is the ratio of PDSCH EPRE to NZP CSI-RS EPRE when the UE derives CSI feedback.

As one sub-embodiment of the above embodiment, "a power offset indicating the ratio of PDSCH EPRE to NZP CSI-RS EPRE is the ratio of PDSCH EPRE to NZP CSI-RS EPRE when the UE derives CSI feedback" means that a power offset indicating the ratio of PDSCH EPRE to NZP CSI-RS EPRE is the ratio of PDSCH EPRE to NZP CSI-RS EPRE assumed when the UE derives CSI feedback.

Typically, the ratio of A to B is equal to A/B.

As one embodiment, a power offset indicating the ratio of PDSCH EPRE to NZP CSI-RS EPRE is power-ControlOffset.

As one embodiment, the configuration information of one CSI-RS resource comprises at least one of the index or identifier, period and offset, resource mapping, number of ports, frequency domain density, CDM (Code Division Multiplexing) type, power control offset, ratio of NZP CSI-RS EPRE to SS/PBCH block EPRE, scrambling index or identifier, BWP index or identifier, repetition, QCL (Quasi-CoLation) information, and TRS (Tracking Reference Signal) information of the CSI-RS resource.

As one sub-embodiment of the above embodiment, the power offset in the configuration information of one CSI-RS resource is the ratio of PDSCH EPRE to NZP CSI-RS EPRE when the UE derives CSI feedback.

As one sub-embodiment of the above embodiment, "the ratio of PDSCH EPRE to NZP CSI-RS EPRE when the UE derives CSI feedback" means the ratio of PDSCH EPRE to NZP CSI-RS EPRE assumed when the UE derives CSI feedback.

As one sub-embodiment of the above embodiment, "the ratio of NZP CSI-RS EPRE to SS/PBCH block EPRE" means the assumed ratio of NZP CSI-RS EPRE to SS/PBCH block EPRE.

As one embodiment, the configuration information of one SS/PBCH block resource comprises an index or identifier of the SS/PBCH block resource.

As one embodiment, the configuration information of one SS/PBCH block resource comprises at least one of the index or identifier, period, time offset, and frequency domain offset of the SS/PBCH block resource.

Typically, the index or identifier of one RS resource is used for identifying the one RS resource.

As one embodiment, one RS resource belongs to a plurality of slots in the time domain, wherein a portion within one slot is referred to as one transmission occasion of the one RS resource.

As one embodiment, one RS resource is a periodic RS resource or a semi-persistent RS resource, wherein a portion within one period is referred to as one transmission occasion of the one RS resource.

As one embodiment, only the first occasion set in all transmission occasions of each RS resource in the first RS resource set is used for obtaining channel measurement for calculating the first CSI reporting.

As one embodiment, the first occasion set comprises the most recent transmission occasion of at least the first CSI-RS resource in the first RS resource set that is not later than the CSI reference resource of the first CSI reporting.

As one sub-embodiment of the above embodiment, the first CSI-RS resource in the first occasion set comprises only one transmission occasion.

As one sub-embodiment of the above embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"configured"*.

As one embodiment, the first occasion set comprises all transmission occasions of at least the first CSI-RS resource in the first RS resource set that are not later than the CSI reference resource of the first CSI reporting.

As one sub-embodiment of the above embodiment, the first CSI-RS resource in the first occasion set comprises one or more transmission occasions.

As one sub-embodiment of the above embodiment, the first CSI reporting configuration comprises a higher layer parameter *timeRestrictionForChannelMeasurements,* and the higher layer parameter *timeRestrictionForChannelMea-*

*surements* in the first CSI reporting configuration is set to *"notConfigured"*.

As one embodiment, the first occasion set comprises the most recent transmission occasion of each RS resource in the first RS resource set that is not later than the CSI reference resource of the first CSI reporting.

As one sub-embodiment of the above embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"configured"*.

As one embodiment, the first occasion set comprises at least one transmission occasion of each RS resource in the first RS resource set that is not later than the CSI reference resource of the first CSI reporting.

As one embodiment, the first occasion set comprises all transmission occasions of each RS resource in the first RS resource set that are not later than the CSI reference resource of the first CSI reporting.

As one sub-embodiment of the above embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"notConfigured"*.

As one embodiment, the at least one transmission occasion comprises: one or more transmission occasions.

As one embodiment, the at least one transmission occasion comprises: only one transmission occasion.

As one embodiment, the at least one transmission occasion comprises: a plurality of transmission occasions.

As one embodiment, the meaning of "one transmission occasion of one RS resource is later than the CSI reference resource of the first CSI reporting" comprises: the CSI reference resource of the first CSI reporting is a first downlink slot, the one transmission occasion of the one RS resource belongs to a downlink slot, and the one downlink slot to which the one transmission occasion of the one RS resource belongs is later than the first downlink slot; and the meaning of "one transmission occasion of one RS resource is not later than the CSI reference resource of the first CSI reporting" comprises: the CSI reference resource of the first CSI reporting is a first downlink slot, the one transmission occasion of the one RS resource belongs to a downlink slot, and the one downlink slot to which the one transmission occasion of the one RS resource belongs is not later than the first downlink slot.

As one embodiment, the meaning of "one transmission occasion of one RS resource is later than the CSI reference resource of the first CSI reporting" comprises: the start moment of the one transmission occasion of the one RS resource is later than the end moment of the CSI reference resource of the first CSI reporting; and the meaning of "one transmission occasion of one RS resource is not later than the CSI reference resource of the first CSI reporting" comprises: the end moment of the one transmission occasion of the one RS resource is not later than the start moment of the CSI reference resource of the first CSI reporting.

As one embodiment, the CSI reference resource of the first CSI reporting is a group of downlink PRBs (Physical Resource Blocks) corresponding to a band related to the first CSI reporting on a frequency domain.

As one embodiment, the CSI reference resource of the first CSI reporting is a frequency domain resource related to the first CSI reporting on a frequency domain.

As one embodiment, the CSI reference resource of the first CSI reporting is a subband or broadband related to the first CSI reporting on a frequency domain.

As one embodiment, the CSI reference resource of the first CSI reporting and a frequency domain resource related to the first CSI reporting belong to the same BWP (Bandwidth Part) on a frequency domain.

As one embodiment, the band related to the first CSI reporting is a band where the CSI indicated by the first CSI reporting is located.

As one embodiment, the frequency domain resource related to the first CSI reporting is a frequency domain resource where the CSI indicated by the first CSI reporting is located.

As one embodiment, the CSI reference resource of the first CSI reporting is a first downlink slot on a time domain.

As one embodiment, the CSI reference resource of the first CSI reporting is a downlink slot.

As one embodiment, the CSI reference resource of the first CSI reporting depends on a second uplink slot.

As one embodiment, the first downlink slot depends on a second uplink slot.

As one embodiment, the second uplink slot is a slot n'.

As one embodiment, the second uplink slot is a slot that sends the first CSI reporting.

As one embodiment, the second uplink slot is a slot where the PUCCH carrying the first CSI reporting is located.

As one embodiment, the second uplink slot is a slot where the PUSCH carrying the first CSI reporting is located.

As one embodiment, the first information block is received earlier than the first downlink slot.

As one embodiment, the first downlink slot is no earlier than the effective moment of the at least one index.

As one embodiment, the description of the CSI reference resource of the first CSI reporting refers to Section 5.2.2.5 of 3GPP TS38.214.

As one embodiment, the first downlink slot is a slot $n - n_{CSI\_ref} - K_{offset} \cdot \frac{2^{\mu_{DL}}}{2^{\mu_{K_{offset}}}}$, wherein $K_{offset}$ is configured by a higher layer signaling, and $\mu_{K_{offset}}$ is a subcarrier spacing configuration of the $K_{offset}$.

As one embodiment, $n_{CSI\_ref}$ is a minimum value not less than $4 \cdot 2^{\mu DL}$.

As one embodiment, $n_{CSI\_ref}$ is a minimum value not less than $5 \cdot 2^{\mu_{DL}}$.

As one embodiment, the n is the sum of a first component and a second component.

As one embodiment, the first component is one integer.

As one embodiment, the first component is $\left\lfloor n' \cdot \frac{2^{\mu_{DL}}}{2^{\mu_{UL}}} \right\rfloor$, wherein $\mu_{DL}$ and $\mu_{UL}$ are downlink and uplink subcarrier spacing configurations, respectively, $\lfloor x \rfloor$ represents a down rounding operation performed on x.

As one embodiment, the second component is one integer.

As one embodiment, the second component is $\left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$, wherein $N_{slot,\,offset}^{CA}$ and $\mu_{offset}$ are configured by a higher layer parameter ca-SlotOffset, and for detailed description, refer to section 4.5 of 3GPP TS38.211.

As one embodiment, the n is $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$.

As one embodiment, the first downlink slot is a downlink slot $\left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}}$.

As one embodiment, "in the calculation of the first CSI reporting, the ratio of PDSCH EPRE to first CSI-RS EPRE is equal to the first power control offset" means that: a ratio of PDSCH EPRE to the first CSI-RS EPRE assumed in the calculation the first CSI reporting is equal to the first power control offset.

As one embodiment, channel information measured in one first transmission occasion is used for calculating the first CSI reporting, and the channel information measured in the one transmission occasion is used for calculating the first CSI reporting after power adjustment is performed by using a first coefficient, wherein the first coefficient is related to the first CSI-RS EPRE.

Under the limitations of the above methods or embodiments, how the ratio of PDSCH EPRE to the first CSI-RS EPRE is used for calculating the first CSI reporting is determined by the manufacturer of the first node independently, or is implementation-related. A typical but non-restrictive implementation is described below:

The first node performs measurement on the first CSI-RS resource to obtain a channel parameter matrix $H_{r \times t}$, wherein r, t are the number of receiving antennas and the number of antenna ports of the first CSI-RS resource, respectively; and power adjustment is performed on the channel parameter matrix $H_{r \times t}$, and the adjusted channel parameter matrix is $\sqrt{P} \cdot H_{r \times t}$, wherein P is the assumed ratio of PDSCH EPRE to the first CSI-RS EPRE (i.e., the first power control offset).

Under the limitations of the above methods or embodiments, the specific algorithm for calculating the first CSI reporting is determined by the manufacturer of the first node independently, or is implementation-related. A typical but non-restrictive implementation is described below:

The first node firstly performs measurement on the first CSI-RS resource to obtain a channel parameter matrix $H_{r \times t}$, wherein r, t are the number of receiving antennas and the number of antenna ports of the first CSI-RS resource, respectively; power adjustment is performed on the channel parameter matrix $H_{r \times t}$, and the adjusted channel parameter matrix is $\sqrt{P} \cdot H_{r \times t}$, wherein P is the assumed ratio of PDSCH EPRE to the first CSI-RS EPRE (i.e., the first power control offset); under the condition that a precoding matrix $W_{t \times l}$ is used, the precoded channel parameter matrix is $\sqrt{P} \cdot H_{r \times t} \cdot W_{t \times l}$, wherein l is a rank or the number of layers, in one case, l is a positive integer not greater than t, in another case, the precoding matrix is an identity matrix, and at this time, t = l; and the equivalent channel capacity of $H_{r \times t} \cdot W_{t \times l}$ is calculated using the criteria such as an SINR (Signal Interference Noise Ratio), EESM (Exponential Effective SINR Mapping), or a RBIR (Received Block Mean Mutual Information Ratio), and then the CQI included in the first CSI reporting is determined by the equivalent channel capacity by table lookup or the like. In general, the calculation of the equivalent channel capacity requires the first node to estimate the interference (including noise), and the first node can use the measurement of the second occasion set in the present application to obtain more accurate measurement interference. Generally speaking, the direct mapping of the equivalent channel capacity to the value of CQI depends on the receiver performance or hardware-related factors such as a modulation mode.

As one embodiment, the EPRE of two CSI-RS resources in the first RS resource set is different.

As one embodiment, the ratios of the EPRE of two CSI-RS resources in the first RS resource set to the SS/PBCH block EPRE are different.

As one embodiment, the meaning of "the EPRE of two CSI-RS resources in the first RS resource set is different" comprises: the ratios of the EPRE of two CSI-RS resources in the first RS resource set to the SS/PBCH block EPRE is different.

As one embodiment, the ratios of the EPRE of two CSI-RS resources in the first RS resource set to the SS/PBCH block EPRE are configured or indicated respectively.

As one embodiment, the EPRE in the respective transmission occasions of two CSI-RS resources in the first RS resource set is different.

As one embodiment, the ratios of the EPRE in the respective transmission occasions of two CSI-RS resources in the first RS resource set to the SS/PBCH block EPRE are different.

As one embodiment, the meaning of "the EPRE in the respective transmission occasions of two CSI-RS resources in the first RS resource set is different" comprises: the ratios of the EPRE in the respective transmission occasions of two CSI-RS resources in the first RS resource set to the SS/PBCH block EPRE are different.

As one embodiment, the EPRE of one CSI-RS resource in the first RS resource set in two transmission occasions of the CSI-RS resource is different.

As one embodiment, the meaning of the sentence "the EPRE of one CSI-RS resource in the first RS resource set in two transmission occasions of the CSI-RS resource is different" comprises: the ratios of the EPRE of one CSI-RS resource in the first RS resource set in two transmission occasions of the CSI-RS resource to the SS/PBCH block EPRE are different.

As one embodiment, the ratios of the EPRE of one CSI-RS resource in the first RS resource set in two transmission occasions of the CSI-RS resource to the SS/PBCH block EPRE are different.

As one embodiment, there are two RS resources in the first RS resource set that have different EPRE in the respective transmission occasions belonging to the first occasion set.

As one embodiment, there is one RS resource in the first RS resource set that has EPRE that is different from the first CSI-RS EPRE in one transmission occasion of the RS resource in the first occasion set.

As one embodiment, the EPRE in one transmission occasion of any RS resource in the first RS resource set of the RS resource in the first occasion set is different from the first CSI-RS EPRE.

As one embodiment, there is one RS resource in the first RS resource set that has EPRE that is equal to the first CSI-RS EPRE in one transmission occasion of the RS resource in the first occasion set.

As one embodiment, the unit of the first CSI-RS EPRE is mW (milliwatt), and the unit of the EPRE in the present application is mW (milliwatt).

As one embodiment, the unit of the first CSI-RS EPRE is joule, and the unit of the EPRE in the present application is joule.

As one embodiment, the first CSI-RS EPRE is predefined.

As one embodiment, the first CSI-RS EPRE is configurable.

As one embodiment, the ratio of the first CSI-RS EPRE to the SS/PBCH block EPRE is predefined.

As one embodiment, the ratio of the first CSI-RS EPRE to the SS/PBCH block EPRE is configurable.

As one embodiment, the ratio of the first CSI-RS EPRE to the SS/PBCH block EPRE is independent of the ratio of the EPRE of the first CSI-RS resource to the SS/PBCH block EPRE.

As one embodiment, the first CSI-RS EPRE is configured or indicated independently of the first CSI-RS resource.

As one embodiment, the ratio of the first CSI-RS EPRE to the SS/PBCH block EPRE is configured or indicated independently of the ratio of the EPRE of the first CSI-RS resource to the SS/PBCH block EPRE.

As one embodiment, the first CSI-RS resource comprises only one transmission occasion in the first occasion set, and the EPRE in the only one transmission occasion of the first CSI-RS resource in the first occasion set is different from the first CSI-RS EPRE.

As one embodiment, the first occasion set comprises the most recent transmission occasion of at least the first CSI-RS resource in the first RS resource set that is not later than the CSI reference resource of the first CSI reporting, and the EPRE in one transmission occasion of the first CSI-RS resource in the first occasion set is different from the first CSI-RS EPRE.

As one embodiment, the first CSI-RS resource comprises one or more transmission occasions in the first occasion set, and the EPRE in the at least one transmission occasion of the first CSI-RS resource in the first occasion set is different from the first CSI-RS EPRE.

As one embodiment, the meaning of the sentence "the EPRE in one transmission occasion of the first CSI-RS resource in the first occasion set is different from the first CSI-RS EPRE" comprises: the ratio of the EPRE in one transmission occasion of the first CSI-RS resource in the first occasion set to the SS/PBCH block EPRE is different from the ratio of the first CSI-RS EPRE to the SS/PBCH block EPRE.

As one embodiment, the first CSI-RS EPRE is independent of the EPRE in any transmission occasion of the first CSI-RS resource in the first occasion set.

As one embodiment, the first CSI-RS EPRE is independent of the EPRE in at least one transmission occasion of the first CSI-RS resource in the first occasion set.

As one embodiment, the EPRE in the most recent transmission occasion of the first CSI-RS resource in the first occasion set is different from the first CSI-RS EPRE.

As one embodiment, the EPRE in at least one transmission occasion of the first CSI-RS resource in the first occasion set is different from the first CSI-RS EPRE.

As one embodiment, the EPRE in any transmission occasion of the first CSI-RS resource in the first occasion set is different from the first CSI-RS EPRE.

## Embodiment 1B

Embodiment 1B shows a flowchart of a first CSI reporting configuration, a first information block, and first CSI reporting according to one embodiment of the present application, as shown in FIG. 1B. In 100B shown in FIG. 1B, each block represents one step.

In Embodiment 1B, the first node in the present application receives a first CSI reporting configuration in step 101B, wherein the first CSI reporting configuration comprises a first RS resource set, and the first RS resource set comprises one or more RS resources; receives a first information block in step 102B, wherein the first information block is used for indicating a first power control offset; and sends first CSI reporting in step 103B, wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

As one embodiment, the first CSI (Channel Status Information) reporting configuration is carried by a higher layer signaling.

As one embodiment, the first CSI reporting configuration is carried by an RRC signaling.

As one embodiment, the first CSI reporting configuration comprises one RRC IE (Information Element).

As one embodiment, the first CSI reporting configuration comprises one or more RRC IEs.

As one embodiment, the first CSI reporting configuration is IE CSI-ReportConfig.

As one embodiment, a name of the first CSI reporting configuration comprises CSI-ReportConfig.

As one embodiment, the first CSI reporting configuration comprises one CSI resource configuration, and the one CSI resource configuration is used for configuring the first RS resource set.

As one sub-embodiment of the above embodiment, the one CSI resource configuration is one IE CSI-ResourceConfig.

As one sub-embodiment of the above embodiment, the first CSI reporting configuration comprises a resourcesForChannelMeasurement field, and the resourcesForChannelMeasurement field included in the first CSI reporting configuration indicates the one CSI resource configuration.

As one embodiment, the first CSI reporting configuration comprises a plurality of CSI resource configurations, and one CSI resource configuration in the plurality of CSI resource configurations is used for configuring the first RS resource set.

As one embodiment, the one CSI resource configuration used for configuring the first RS resource set comprises an identifier or index of each RS resource in the first RS resource set.

As one embodiment, the one CSI resource configuration used for configuring the first RS resource set comprises an identifier of each RS resource in the first RS resource set.

As one embodiment, the one CSI resource configuration used for configuring the first RS resource set is used for configuring each RS resource in the first RS resource set.

As one embodiment, the one CSI resource configuration used for configuring the first RS resource set comprises configuration information of each RS resource in the first RS resource set.

As one embodiment, the first CSI reporting configuration comprises a resourcesForChannelMeasurement field, and the resourcesForChannelMeasurement field included in the first CSI reporting configuration is used for indicating the first RS resource set.

As one embodiment, specific definitions of IE CSI-ReportConfig , resourcesForChannelMeasurement, and IE CSI-ResourceConfig refer to Section 6.3.2 of 3GPP TS 38.331.

As one embodiment, the first CSI reporting configuration comprises a reportConfigType field; The reportConfigType field in the first CSI reporting configuration indicates which of the following is the first CSI reporting: periodic, semi-persistent on a PUSCH, semi-persistent on a PUCCH, or aperiodic.

As one embodiment, a channel measurement resource of the first CSI reporting configuration comprises the first RS resource set.

As one embodiment, the first RS resource set is used for channel measurement of the first CSI reporting.

As one embodiment, the first RS resource set comprises one RS resource.

As one embodiment, the first RS resource set comprises a plurality of RS resources.

As one embodiment, the first RS resource set comprises at least one CSI-RS (Channel State Information-Reference Signal) resource.

As one embodiment, the first RS resource set comprises a plurality of CSI-RS resources.

As one embodiment, the first RS resource set comprises one or two of the CSI-RS resource or a SS/PBCH (Synchronization Signal/Physical Broadcast CHannel) block resource.

As one embodiment, any RS resource in the first RS resource set is the CSI-RS resource or the SS/PBCH block resource.

As one embodiment, the first RS resource set comprises one or two of the CSI-RS resource or the SSB resource.

As one embodiment, any RS resource in the first RS resource set is the CSI-RS resource or the SSB resource.

As one embodiment, any RS resource in the first RS resource set is the CSI-RS resource.

As one embodiment, the SSB refers to a Synchronization Signal Block.

As one embodiment, the SSB refers to a Synchronization Signal/Physical Broadcast Channel Block.

Typically, the CSI-RS resource in the present application is an NZP (Non-Zero Power) CSI-RS resource.

As one embodiment, the first RS resource set comprises at least one periodic or semi-persistent CSI-RS resource.

As one embodiment, the first RS resource set comprises at least one periodic CSI-RS resource.

As one embodiment, the first RS resource set comprises at least one semi-persistent CSI-RS resource.

As one embodiment, any RS resource in the first RS resource set is a periodic or semi-persistent CSI-RS resource.

As one embodiment, any RS resource in the first RS resource set is a periodic CSI-RS resource.

As one embodiment, any RS resource in the first RS resource set is a semi-persistent CSI-RS resource.

As one embodiment, a period and a slot offset of the CSI-RS resource in the first RS resource set are configured by a parameter CSI-ResourcePeriodicityAndOffset in a higher layer parameter reportSlotConfig, and a unit of the period of the CSI-RS resource in the first RS resource set is a slot.

As one embodiment, the first CSI reporting configuration comprises a higher layer parameter *timeRestriction-ForChannelMeasurements,* and the higher layer parameter *timeRestrictionForChannelMeasurements* in the first CSI reporting configuration is set to *"notConfigured"*.

As one embodiment, the CSI reference resource of the first CSI reporting is a frequency domain resource targeted by the first CSI reporting on a frequency domain.

As one embodiment, the CSI reference resource of the first CSI reporting is a subband or broadband targeted by the first CSI reporting on a frequency domain.

As one embodiment, the CSI reference resource of the first CSI reporting and a frequency domain resource targeted by the first CSI reporting belong to the same BWP (Bandwidth Part) on a frequency domain.

As one embodiment, the CSI reference resource of the first CSI reporting is a first downlink slot on a time domain, the first downlink slot depends on a second uplink slot, and the second uplink slot is an uplink slot that sends the first CSI reporting.

As one embodiment, the CSI reference resource of the first CSI reporting is a first downlink slot on a time domain.

As one embodiment, the CSI reference resource of the first CSI reporting is a downlink slot.

As one embodiment, the CSI reference resource of the first CSI reporting depends on a second uplink slot.

As one embodiment, the first downlink slot depends on a second uplink slot.

As one embodiment, the second uplink slot is an uplink slot *n'*.

As one embodiment, the second uplink slot is an uplink slot that sends the first CSI reporting.

As one embodiment, the second uplink slot is an uplink slot where the PUCCH carrying the first CSI reporting is located.

As one embodiment, the second uplink slot is an uplink slot where the PUSCH carrying the first CSI reporting is located.

As one embodiment, the description of the CSI reference resource of the first CSI reporting refers to Section 5.2.2.5 of 3GPP TS38.214.

As one embodiment, the first downlink slot is a downlink slot $n - n_{CSI\_ref} - K_{offset} \cdot \frac{2^{\mu_{DL}}}{2^{\mu_{K_{offset}}}}$, wherein $K_{offset}$ is configured by a higher layer signaling, and $\mu_{K_{offset}}$ is a subcarrier spacing configuration of the $K_{offset}$.

As one embodiment, $n_{CSI\_ref}$ is a minimum value not less than $4 \cdot 2^{\mu \cdot DL}$.

As one embodiment, $n_{CSI\_ref}$ is a minimum value not less than $5 \cdot 2^{\mu DL}$.

As one embodiment, the $n$ is the sum of a first component and a second component.

As one embodiment, the first component is one integer.

As one embodiment, the first component is $\left\lfloor n' \cdot \frac{2^{\mu_{DL}}}{2^{\mu_{UL}}} \right\rfloor$, wherein $\mu_{DL}$ and $\mu_{UL}$ are downlink and uplink subcarrier spacing configurations, respectively, and $\lfloor x \rfloor$ represents a down rounding operation performed on x.

As one embodiment, the second component is one integer.

As one embodiment, the second component is $\left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor$ , wherein $N^{CA}_{slot,\,offset}$ and $\mu_{offset}$ are configured by a higher layer parameter ca-SlotOffset, and for detailed description, refer to section 4.5 of 3GPP TS38.211.

As one embodiment, the $n$ is $\left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor \cdot$

As one embodiment, the first downlink slot is a downlink slot

$$\left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}} \cdot$$

As one embodiment, the first CSI reporting configuration is used for configuring one aperiodic CSI reporting, and the first CSI reporting is the one aperiodic CSI reporting configured by the first CSI reporting configuration.

As one embodiment, the first CSI reporting configuration is used for configuring one periodic or semi-persistent CSI reporting, and the first CSI reporting is a reporting instance of the periodic or semi-persistent CSI reporting configured by the first CSI reporting configuration.

As one embodiment, the first CSI reporting configuration is used for configuring one periodic CSI reporting, and the first CSI reporting is a reporting instance of the periodic CSI reporting configured by the first CSI reporting configuration.

As one embodiment, the first CSI reporting configuration is used for configuring one semi-persistent CSI reporting, and the first CSI reporting is a reporting instance of the semi-persistent CSI reporting configured by the first CSI reporting configuration.

As one embodiment, the first CSI reporting is transmitted on a physical channel.

As one embodiment, the first CSI reporting is transmitted on a PUSCH (Physical Uplink Shared Channel).

As one embodiment, the first CSI reporting is transmitted on a PUCCH (Physical Uplink Control Channel).

As one embodiment, the first CSI reporting is periodic or semi-persistent.

As one embodiment, the first CSI reporting is semi-persistent, and the first CSI reporting is activated by one MAC CE.

As one embodiment, a name of the MAC CE that activates the first CSI reporting comprises SP CSI reporting on PUCCH Activation MAC CE.

As one embodiment, the first CSI reporting is aperiodic, the first CSI reporting is triggered by one piece of DCI (Downlink Control Information), the one piece of DCI comprises a CSI request field, and the CSI request field of the one piece of DCI is used for indicating one trigger state, and the one trigger state indicates the first CSI reporting configuration.

As one embodiment, the first CSI reporting is semi-persistent, and when the first node receives one activation command, the first node sends the first CSI reporting on the PUCCH.

As one embodiment, the one activation command comprises SP CSI reporting on PUCCH Activation MAC CE.

As one embodiment, the first CSI reporting is semi-persistent, and when the first node is triggered by the one piece of DCI, the first node sends the first CSI reporting on the PUSCH.

As one embodiment, at least one RS resource in the first RS resource set is used in an energy saving mode of the second node.

As one embodiment, the at least one RS resource in the first RS resource set is used in an energy saving mode of a cell.

As one embodiment, the first CSI reporting configuration further indicates a report quantity included in the first CSI reporting.

As one embodiment, the first CSI reporting configuration comprises a reportQuantity field, and the field in the first CSI reporting configuration indicates a report quantity included in the first CSI reporting.

As one embodiment, the report quantity included in the first CSI reporting comprises at least one of a CQI (Channel Quality Indicator), a PMI (Precoding Matrix Indicator), a CRI (CSI-RS Resource Indicator), an SSBRI (SS/PBCH Block Resource Indicator), an LI (Layer Indicator), an RI (Rank Indicator), an L1-RSRP (Layer 1 reference signal received power), or an L1-SINR (Layer 1 signal-to-noise and interference ratio).

As one embodiment, the first CSI reporting comprises a CRI or an SSBRI, and L1-RSRP.

As one embodiment, the first CSI reporting comprises a CRI or an SSBRI, and L1-SINR.

As one embodiment, the first CSI reporting comprises at least a CRI.

As one embodiment, the first CSI reporting comprises at least a CQI.

As one embodiment, the first CSI reporting comprises at least a CRI and a CQI.

As one embodiment, the first CSI reporting comprises a CRI, an RI, a PMI, and a CQI.

As one embodiment, the first CSI reporting comprises a CRI, an RI, an LI, a PMI, and a CQI.

As one embodiment, the first CSI reporting comprises a CRI, an RI, and a PMI.

As one embodiment, the first CSI reporting comprises a CRI, an RI, and a CQI.

As one embodiment, the first CSI reporting comprises a CRI and an RSRP.

As one embodiment, the first CSI reporting comprises a CRI and an L1-RSRP.

As one embodiment, the first CSI reporting comprises a CRI and an L1-SINR.

As one embodiment, the first CSI reporting comprises at least a CRI, and the CRI included in the first CSI reporting is used for indicating the first CSI-RS resource, wherein the first CSI-RS resource is one RS resource in the first RS resource set.

As one embodiment, the first CSI reporting configuration comprises a higher layer parameter timeRestriction-ForChannelMeasurements, and the higher layer parameter timeRestrictionForChannelMeasurements in the first CSI reporting configuration is set to "notConfigured".

As one embodiment, the first power control offset is a non-negative real number.

As one embodiment, the first power control offset is a positive real number.

As one embodiment, the dB (deciBel) value of the first power control offset is an integer not less than -8 and not greater than 15.

Typically, the first power control offset is $a$, and the dB value of the first power control offset is $10log_{10}(a)$.

Typically, the unit of the dB value of the first power control offset is dB.

As one embodiment, the first information block is carried by an RRC signaling.

As one embodiment, the first information block comprises part or all of the fields in one RRC IE.

As one embodiment, the first information block comprises part of the fields in one RRC IE.

As one embodiment, the first information block comprises a powerControlOffset field in IE NZP-CSI-RS-Resource.

As one embodiment, the first information block comprises part of the fields in IE NZP-CSI-RS-Resource.

As one embodiment, the first information block comprises a higher layer parameter powerControlOffset.

As one embodiment, the name of the first information block comprises powerControlOffset.

As one embodiment, the name of the first information block comprises power.

As one embodiment, the first power control offset belongs to configuration information of the first CSI-RS resource.

As one embodiment, the first CSI reporting indicates the first CSI-RS resource, and the first power control offset belongs to configuration information of the first CSI-RS resource.

As one embodiment, the first CSI reporting comprises at least a CRI, and the CRI included in the first CSI reporting is used for indicating the first CSI-RS resource, wherein the first CSI-RS resource is one RS resource in the first RS resource set.

As one embodiment, the first information block is carried by an MAC CE signaling.

As one embodiment, the first information block is borne by a physical layer signaling.

As one embodiment, the first information block is carried by a DCI signaling.

As one embodiment, the first information block comprises one field in one piece of DCI.

As one embodiment, the first information block comprises one or more fields in one piece of DCI.

As one embodiment, the first information block comprises a CSI request field in one piece of DCI.

As one embodiment, the first information block comprises at least one field different from the CSI request field in one piece of DCI.

As one embodiment, the first information block comprises a CSI request field and at least one field different from the CSI request field in one piece of DCI.

As one embodiment, the first CSI reporting is aperiodic, the first CSI reporting is triggered by one piece of DCI, and the one piece of DCI comprises the first information block.

As one sub-embodiment of this embodiment, the first information block comprises a CSI request field in the one piece of DCI.

As one sub-embodiment of this embodiment, the first information block comprises at least one field different from the CSI request field in the one piece of DCI.

As one sub-embodiment of this embodiment, the first information block comprises a CSI request field in the one piece of DCI and at least one field different from the CSI request field in the one piece of DCI.

As one embodiment, the first CSI reporting is aperiodic, the first CSI reporting is triggered by one piece of DCI, the one piece of DCI comprises the first information block, the first information block is a CSI request field, the first information block of the one piece of DCI is used for indicating a trigger state, and the one trigger state indicates the first CSI reporting configuration.

As one embodiment, the first power control offset is the ratio of PDSCH (Physical Downlink Shared Channel) EPRE (Energy per resource element) configured for the first CSI-RS resource to NZP CSI-RS EPRE.

As one embodiment, the first power control offset is the ratio of PDSCH EPRE to NZP CSI-RS EPRE when the UE derives CSI feedback.

As one sub-embodiment of the above embodiment, "the first power control offset is the ratio of PDSCH EPRE to NZP CSI-RS EPRE when the UE derives CSI feedback" means that the first power control offset is the ratio of PDSCH EPRE to NZP CSI-RS EPRE assumed when the UE derives CSI feedback.

As one embodiment, the configuration information of any CSI-RS resource in the first RS resource set comprises a power offset indicating the ratio of PDSCH EPRE to NZP CSI-RS EPRE.

As one embodiment, a power offset indicating the ratio of PDSCH EPRE to NZP CSI-RS EPRE is the ratio of PDSCH EPRE to NZP CSI-RS EPRE when the UE derives CSI feedback.

As one sub-embodiment of the above embodiment, "a power offset indicating the ratio of PDSCH EPRE to NZP CSI-RS EPRE is the ratio of PDSCH EPRE to NZP CSI-RS EPRE when the UE derives CSI feedback" means that a power offset indicating the ratio of PDSCH EPRE to NZP CSI-RS EPRE is the ratio of PDSCH EPRE to NZP CSI-RS EPRE assumed when the UE derives CSI feedback.

Typically, the ratio of A to B is equal to A/B.

As one embodiment, a power offset indicating the ratio of PDSCH EPRE to NZP CSI-RS EPRE is power-ControlOffset.

As one embodiment, the configuration information of one CSI-RS resource comprises at least one of the index or identifier, period and offset, resource mapping, number of ports, frequency domain density, CDM (Code Division Multiplexing) type, power control offset, ratio of NZP CSI-RS EPRE to SS/PBCH block EPRE, scrambling index or identifier, BWP index or identifier, repetition, QCL (Quasi-CoLation) information, and TRS (Tracking Reference Signal) information of the CSI-RS resource.

As one sub-embodiment of the above embodiment, the power offset in the configuration information of one CSI-RS resource is the ratio of PDSCH EPRE to NZP CSI-RS EPRE when the UE derives CSI feedback.

As one sub-embodiment of the above embodiment, "the ratio of PDSCH EPRE to NZP CSI-RS EPRE when the UE derives CSI feedback" means the ratio of PDSCH EPRE to NZP CSI-RS EPRE assumed when the UE derives CSI feedback.

As one sub-embodiment of the above embodiment, "the ratio of NZP CSI-RS EPRE to SS/PBCH block EPRE" means the assumed ratio of NZP CSI-RS EPRE to SS/PBCH block EPRE.

As one embodiment, the configuration information of one SS/PBCH block resource comprises an index or identifier of the SS/PBCH block resource.

As one embodiment, the configuration information of one SS/PBCH block resource comprises at least one of the index or identifier, period, time offset, and frequency domain offset of the SS/PBCH block resource.

Typically, the index or identifier of one RS resource is used for identifying the one RS resource.

As one embodiment, one RS resource belongs to a plurality of slots in the time domain, wherein a portion within one slot is referred to as one transmission occasion of the one RS resource.

As one embodiment, one RS resource is a periodic RS resource or a semi-persistent RS resource, wherein a portion within one period is referred to as one transmission occasion of the one RS resource.

As one embodiment, only the first occasion set in all transmission occasions of each RS resource in the first RS resource set is used for obtaining channel measurement for calculating the first CSI reporting.

As one embodiment, the first occasion set comprises one or more transmission occasions of at least one RS resource in the first RS resource set that are not later than the CSI reference resource of the first CSI reporting.

As one embodiment, the first occasion set comprises all transmission occasions of at least one RS resource in the first RS resource set that are not later than the CSI reference resource of the first CSI reporting.

As one embodiment, the first occasion set comprises a transmission occasion of each RS resource in the first RS resource set that is not later than the CSI reference resource of the first CSI reporting.

As one embodiment, the first occasion set comprises one or more transmission occasions of each RS resource in the first RS resource set that are not later than the CSI reference resource of the first CSI reporting.

As one embodiment, the first occasion set comprises all transmission occasions of each RS resource in the first RS resource set that are not later than the CSI reference resource of the first CSI reporting.

As one embodiment, the meaning of "one transmission occasion of one RS resource is later than the CSI reference resource of the first CSI reporting" comprises: the CSI reference resource of the first CSI reporting is a first downlink slot, the one transmission occasion of the one RS resource belongs to a downlink slot, and the one downlink slot to which the one transmission occasion of the one RS resource belongs is later than the first downlink slot; and the meaning of "one transmission occasion of one RS resource is not later than the CSI reference resource of the first CSI reporting" comprises: the CSI reference resource of the first CSI reporting is a first downlink slot, the one transmission occasion of the one RS resource belongs to a downlink slot, and the one downlink slot to which the one transmission occasion of the one RS resource belongs is not later than the first downlink slot.

As one embodiment, the meaning of "one transmission occasion of one RS resource is later than the CSI reference resource of the first CSI reporting" comprises: the start moment of the one transmission occasion of the one RS resource is later than the end moment of the CSI reference resource of the first CSI reporting; and the meaning of "one transmission occasion of one RS resource is not later than the CSI reference resource of the first CSI reporting" comprises: the end moment of the one transmission occasion of the one RS resource is not later than the start moment of the CSI reference resource of the first CSI reporting.

As one embodiment, the CSI reference resource of the first CSI reporting is a group of downlink PRBs (Physical Resource Blocks) corresponding to a band related to the first CSI reporting on a frequency domain.

As one embodiment, the CSI reference resource of the first CSI reporting is a frequency domain resource related to the first CSI reporting on a frequency domain.

As one embodiment, the CSI reference resource of the first CSI reporting is a subband or broadband related to the first CSI reporting on a frequency domain.

As one embodiment, the CSI reference resource of the first CSI reporting and a frequency domain resource related to the first CSI reporting belong to the same BWP (Bandwidth Part) on a frequency domain.

As one embodiment, the band related to the first CSI reporting is a band where the CSI indicated by the first CSI reporting is located.

As one embodiment, the frequency domain resource related to the first CSI reporting is a frequency domain resource where the CSI indicated by the first CSI reporting is located.

As one embodiment, the CSI reference resource of the first CSI reporting is a first downlink slot on a time domain.

As one embodiment, the CSI reference resource of the first CSI reporting is a downlink slot.

As one embodiment, the CSI reference resource of the first CSI reporting depends on a second uplink slot.

As one embodiment, the first downlink slot depends on a second uplink slot.

As one embodiment, the second uplink slot is a slot $n'$.

As one embodiment, the second uplink slot is a slot that sends the first CSI reporting.

As one embodiment, the second uplink slot is a slot where the PUCCH carrying the first CSI reporting is located.

As one embodiment, the second uplink slot is a slot where the PUSCH carrying the first CSI reporting is located.

As one embodiment, the first information block is received earlier than the first downlink slot.

As one embodiment, the first downlink slot is no earlier than the effective moment of the at least one index.

As one embodiment, the description of the CSI reference resource of the first CSI reporting refers to Section 5.2.2.5 of 3GPP TS38.214.

As one embodiment, the first downlink slot is a slot $n - n_{CSI\_ref} - K_{offset} \cdot \frac{2^{\mu_{DL}}}{2^{\mu_{K_{offset}}}}$ , wherein $K_{offset}$ is configured by a higher layer signaling, and $\mu_{K_{offset}}$ is a subcarrier spacing configuration of the $K_{offset}$.

As one embodiment, $n_{CSI\_ref}$ is a minimum value not less than $4 \cdot 2^{\mu DL}$.

As one embodiment, $n_{CSI\_ref}$ is a minimum value not less than $5 \cdot 2^{\mu DL}$.

As one embodiment, the n is the sum of a first component and a second component.

As one embodiment, the first component is one integer.

As one embodiment, the first component is $\left\lfloor n' \cdot \frac{2^{\mu_{DL}}}{2^{\mu_{UL}}} \right\rfloor$, wherein $\mu_{DL}$ and $\mu_{UL}$ are downlink and uplink subcarrier spacing configurations, respectively, $\lfloor x \rfloor$ represents a down rounding operation performed on x.

As one embodiment, the second component is one integer.

As one embodiment, the second component is $\left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor$ , wherein $N^{CA}_{slot,\,offset}$ and $\mu_{offset}$ are configured by a higher layer parameter ca-SlotOffset, and for detailed description, refer to section 4.5 of 3GPP TS38.211.

As one embodiment, the $n$ is $\left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor$ .

As one embodiment, the first downlink slot is a downlink slot $\left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \cdot 2^{\mu_{DL}} \right\rfloor - n_{CSI\_ref} - K_{offset} \cdot \frac{2^{\mu_{DL}}}{2^{\mu_{K_{offset}}}}$ .

As one embodiment, "in the calculation of the first CSI reporting, the ratio of PDSCH EPRE to first CSI-RS EPRE is equal to the first power control offset" means that: a ratio of PDSCH EPRE to the first CSI-RS EPRE assumed in the calculation the first CSI reporting is equal to the first power control offset.

As one embodiment, channel information measured in one first transmission occasion is used for calculating the first CSI reporting, and the channel information measured in the one transmission occasion is used for calculating the first CSI reporting after power adjustment is performed by using a first coefficient, wherein the first coefficient is related to the first CSI-RS EPRE.

Under the limitations of the above methods or embodiments, how the ratio of PDSCH EPRE to the first CSI-RS EPRE is used for calculating the first CSI reporting is determined by the manufacturer of the first node independently, or is implementation-related. A typical but non-restrictive implementation is described below:

the first CSI reporting comprises at least a CRI, and the CRI included in the first CSI reporting is used for indicating the first CSI-RS resource, wherein the first CSI-RS resource is one RS resource in the first RS resource set; the first node performs measurement on the first CSI-RS resource to obtain a channel parameter matrix $H_{r \times t}$, wherein $r$, $t$ are the number of receiving antennas and the number of antenna ports of the first CSI-RS resource, respectively; and power adjustment is performed on the channel parameter matrix $H_{r \times t}$, and the adjusted channel parameter matrix is $\sqrt{P} \cdot H_{r \times t}$, wherein P is the assumed ratio of PDSCH EPRE to the first CSI-RS EPRE (i.e., the first power control offset).

Under the limitations of the above methods or embodiments, the specific algorithm for calculating the first CSI reporting is determined by the manufacturer of the first node independently, or is implementation-related. A typical but non-restrictive implementation is described below:

the first CSI reporting comprises a CRI and a CQI, and the CRI included in the first CSI reporting is used for indicating the first CSI-RS resource, wherein the first CSI-RS resource is one RS resource in the first RS resource set; the first node performs measurement on the first CSI-RS resource to obtain a channel parameter matrix $H_{r \times t}$, wherein $r$, $t$ are the number of receiving antennas and the number of antenna ports of the first CSI-RS resource, respectively; power adjustment is performed on the channel parameter matrix $H_{r \times t}$, and the adjusted channel parameter matrix is $\sqrt{P} \cdot H_{r \times t}$, wherein $P$ is the assumed ratio of PDSCH EPRE to the first CSI-RS EPRE (i.e., the first power control offset); under the condition that a precoding matrix $W_{t \times l}$ is used, the precoded channel parameter matrix is $\sqrt{P} \cdot H_{r \times t} \cdot W_{t \times l}$, wherein $l$ is a rank or the number of layers, in one case, $l$ is a positive integer not greater than $t$, in another case, the precoding matrix is an identity matrix, and at this time, $t = l$; and the equivalent channel capacity of $H_{r \times t} \cdot W_{t \times l}$ is calculated using the criteria such as an SINR (Signal Interference Noise Ratio), EESM (Exponential Effective SINR Mapping), or a RBIR (Received Block Mean Mutual Information Ratio), and then the CQI included in the first CSI reporting is determined by the equivalent channel capacity by table lookup or the like. In general, the calculation of the equivalent channel capacity requires the first node to estimate the interference (including noise), and the first node can use the measurement of the second occasion set in the present application to obtain more accurate measurement interference. Generally speaking, the direct mapping of the equivalent channel capacity to the value of CQI depends on the receiver performance or hardware-related factors such as a modulation mode.

As one embodiment, the EPRE of two CSI-RS resources in the first RS resource set is different.

As one embodiment, the ratios of the EPRE of two CSI-RS resources in the first RS resource set to the SS/PBCH block EPRE are different.

As one embodiment, the meaning of "the EPRE of two CSI-RS resources in the first RS resource set is different" comprises: the ratios of the EPRE of two CSI-RS resources in the first RS resource set to the SS/PBCH block EPRE is different.

As one embodiment, the ratios of the EPRE of two CSI-RS resources in the first RS resource set to the SS/PBCH block EPRE are configured or indicated respectively.

As one embodiment, the EPRE in the respective transmission occasions of two CSI-RS resources in the first RS resource set is different.

As one embodiment, the ratios of the EPRE in the respective transmission occasions of two CSI-RS resources in the first RS resource set to the SS/PBCH block EPRE are different.

As one embodiment, the meaning of "the EPRE in the respective transmission occasions of two CSI-RS resources in the first RS resource set is different" comprises: the ratios of the EPRE in the respective transmission occasions of two CSI-RS resources in the first RS resource set to the SS/PBCH block EPRE are different.

As one embodiment, the EPRE of one CSI-RS resource in the first RS resource set in two transmission occasions of the CSI-RS resource is different.

As one embodiment, the meaning of the sentence "the EPRE of one CSI-RS resource in the first RS resource set in two transmission occasions of the CSI-RS resource is different" comprises: the ratios of the EPRE of one CSI-RS resource in the first RS resource set in two transmission occasions of the CSI-RS resource to the SS/PBCH block EPRE are different.

As one embodiment, the ratios of the EPRE of one CSI-RS resource in the first RS resource set in two transmission occasions of the CSI-RS resource to the SS/PBCH block EPRE are different.

As one embodiment, there are two RS resources in the first RS resource set that have different EPRE in the respective transmission occasions belonging to the first occasion set.

As one embodiment, there is one RS resource in the first RS resource set that has EPRE that is different from the first CSI-RS EPRE in one transmission occasion of the RS resource in the first occasion set.

As one embodiment, there is one RS resource in the first RS resource set that has EPRE that is equal to the first CSI-RS EPRE in one transmission occasion of the RS resource in the first occasion set.

As one embodiment, the meaning of "the first CSI-RS EPRE depends on the CSI reference resource of the first CSI reporting" comprises: the first CSI-RS EPRE depends on the EPRE in at least one transmission occasion of one RS resource in the first RS resource set that is not later than the CSI reference resource of the first CSI reporting.

As one embodiment, the meaning of "the first CSI-RS EPRE depends on the CSI reference resource of the first CSI reporting" comprises: the first CSI-RS EPRE depends on the EPRE in all transmission occasions of one RS resource in the first RS resource set that are not later than the CSI reference resource of the first CSI reporting.

As one embodiment, the meaning of "the first CSI-RS EPRE depends on the CSI reference resource of the first CSI reporting" comprises: the first CSI-RS EPRE depends on the EPRE in at least one transmission occasion of one RS resource in the first RS resource set that is only not later than the CSI reference resource of the first CSI reporting.

As one embodiment, the meaning of "the first CSI-RS EPRE depends on the CSI reference resource of the first CSI reporting" comprises: the first CSI-RS EPRE depends on the EPRE in all transmission occasions of one RS resource in the first RS resource set that are only not later than the CSI reference resource of the first CSI reporting.

As one embodiment, the meaning of "the first CSI-RS EPRE depends on the CSI reference resource of the first CSI reporting" comprises: the first CSI-RS EPRE is irrelevant to the EPRE in any transmission occasion of any RS resource in the first RS resource set that is later than the CSI reference resource of the first CSI reporting.

As one embodiment, the meaning of "the first CSI-RS EPRE depends on the CSI reference resource of the first CSI reporting" comprises: the first CSI-RS EPRE depends on the EPRE in one transmission occasion of the first occasion set, and the first occasion set comprises a transmission occasion of at least one RS resource in the first RS resource set that is not later than the CSI reference resource of the first CSI reporting.

As one embodiment, the unit of the first CSI-RS EPRE is mW (milliwatt), and the unit of the EPRE in the present application is mW (milliwatt).

As one embodiment, the unit of the first CSI-RS EPRE is joule, and the unit of the EPRE in the present application is joule.

### Embodiment 2

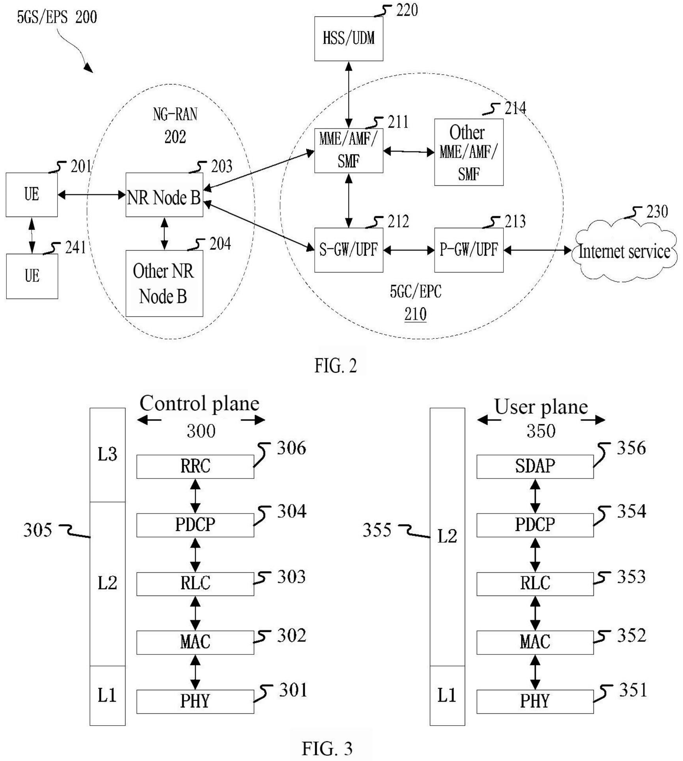

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNB204. The gNB203 provides user and control plane protocol termination toward the UE201. The gNB203 may be connected to other gNB204 via an Xn interface (e.g., backhaul). The gNB203 may also be referred to as a base station, a base transceiver station, a radio base station, a radio transceiver, a transceiver function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, a car, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem) and a packet switching service.

As one embodiment, the first node in the present application comprises the UE201.

As one embodiment, the first node in the present application comprises the UE241.

As one embodiment, the second node in the present application comprises the gNB203.

As one embodiment, the UE201 supports Energy Saving on a base station side.

As one embodiment, the gNB203 supports Energy Saving on a base station side.

**Embodiment 3**

Embodiment 3 illustrates a schematic diagram of an embodiment of a wireless protocol architecture for a user plane and a control plane according to one embodiment of the present application, as shown in FIG. 3.

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, gNB or RSU in V2X) and a second communication node device (gNB, UE or RSU in V2X), or between two pieces of UE using three layers: Layer 1, Layer 2, and Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301, and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second communication node device and the first communication node device. The radio protocol architecture for the user plane 350 comprises Layer 1 (L1 layer) and Layer 2 (L2 layer). The radio protocol architecture for a first communication node device and a second communication node device in the user plane 350 is substantially the same as the corresponding layers and sublayers in the control plane 300 as for a physical layer 351, a PDCP sublayer 354 in the L2 layer 355, an RLC sublayer 353 in the L2 layer 355, and an MAC sublayer 352 in the L2 layer 355, but the PDCP sublayer 354 also provides header compression for upper-layer data packets to reduce the wireless transmission overhead. The L2 layer 355 in the user plane 350 also comprises an SDAP (Service Data Adaptation Protocol) sublayer 356, and the SDAP sublayer 356 is responsible for mapping between a QoS stream and a DRB (Data Radio Bearer) to support the diversity of services. Although not shown in the figure, the first communication node device may have several upper layers above the L2 layer 355, comprising a network layer (e.g., IP layer) terminating at the P-GW on the network side and an application layer terminating at the other end (e.g., remote UE and a server, etc.) of a connection.

As one embodiment, the wireless protocol architecture in FIG. 3 is applicable to the first node in the present application.

As one embodiment, the wireless protocol architecture in FIG. 3 is applicable to the second node in the present application.

As one embodiment, the first CSI reporting configuration is generated in the RRC sublayer 306.

As one embodiment, the first information block is generated in the RRC sublayer 306.

As one embodiment, the first information block is generated in the MAC sublayer 302.

As one embodiment, the first information block is generated in the MAC sublayer 352.

As one embodiment, the first information block is generated in the PHY301.

As one embodiment, the first information block is generated in the PHY351.

As one embodiment, the second information block is generated in the RRC sublayer 306.

As one embodiment, the second information block is generated in the MAC sublayer 302.

As one embodiment, the second information block is generated in the MAC sublayer 352.

As one embodiment, the second information block is generated in the PHY301.

As one embodiment, the second information block is generated in the PHY351.

As one embodiment, the third information block is generated in the RRC sublayer 306.

As one embodiment, the third information block is generated in the MAC sublayer 302.

As one embodiment, the third information block is generated in the MAC sublayer 352.

As one embodiment, the third information block is generated in the PHY301.

As one embodiment, the third information block is generated in the PHY351.

As one embodiment, the first CSI reporting is generated in the PHY301.

As one embodiment, the first CSI reporting is generated in the PHY351.

As one embodiment, the first CSI reporting configuration is generated in the RRC sublayer 306.

As one embodiment, the first information block is generated in the RRC sublayer 306.

As one embodiment, the first information block is generated in the MAC sublayer 302.

As one embodiment, the first information block is generated in the MAC sublayer 352.

As one embodiment, the first information block is generated in the PHY301.

As one embodiment, the first information block is generated in the PHY351.

As one embodiment, the second information block is generated in the RRC sublayer 306.

As one embodiment, the second information block is generated in the MAC sublayer 302.

As one embodiment, the second information block is generated in the MAC sublayer 352.

As one embodiment, the second information block is generated in the PHY301.

As one embodiment, the second information block is generated in the PHY351.

As one embodiment, the first CSI reporting is generated in the PHY301.

As one embodiment, the first CSI reporting is generated in the PHY351.

**Embodiment 4**

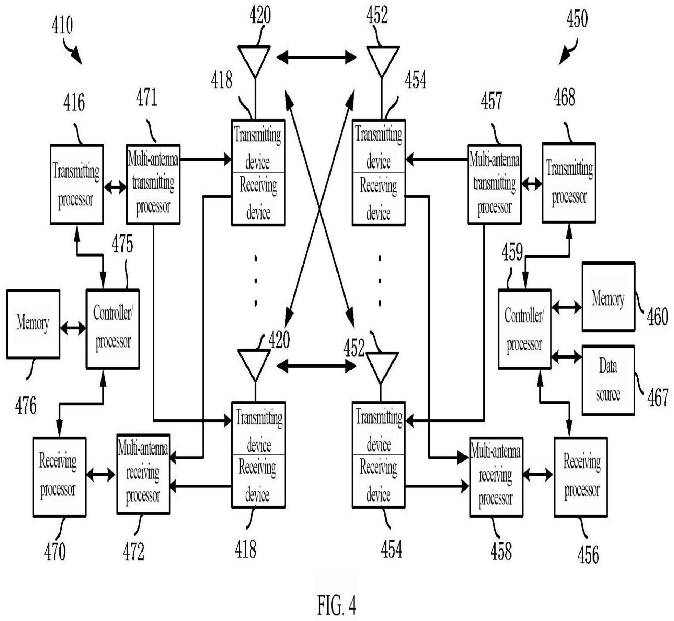

Embodiment 4 exemplifies a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, an upper-layer data packet from a core network is provided to the controller/processor 475. The controller/processor 475 implements the functionality of an L2 layer. In a DL, the controller/processor 475 provides header compression, encryption, packet segmentation and reordering, multiplexing between logical and transmission channels, and radio resource allocation to the second communication device 450 based on various priority metrics. The controller/processor 475 is also responsible for HARQ operations, retransmission of lost packets, and a signaling to the second communication device 450. The transmitting processor 416 and the multi-antenna transmitting processor 471 implement various signal processing functions for the L1 layer (i.e., a physical layer). The transmitting processor 416 implements encoding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, including codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, and each receiving device 454 receives a signal through a corresponding antenna 452 thereof. Each receiving device 454 recovers information modulated onto a radio frequency carrier, converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses the fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for a channel estimation, and any parallel stream destined for the second communication device 450 is recovered after the data signal undergoes multi-antenna detection in the multi-antenna receiving processor 458. The symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In a DL (DownLink), the controller/processor 459 provides demultiplexing between transmission and logical channels, packet reassembly, decryption, header decompression, and control signal processing to recover upper-layer data packets from a core network. The upper-layer data packets are then provided to all protocol layers above the L2 layer. Various control signals may also be provided to an L3 for L3 processing. The controller/processor 459 is also responsible for error detection using an acknowledgement (ACK) and/or negative acknowledgement (NACK) protocol to support HARQ operations.

In the transmission from the second communication device 450 to the first communication device 410, at the second communication device 450, the upper-layer data packets are provided to the controller/processor 459 using the data source 467. The data source 467 represents all protocol layers above the L2 layer. Similar to a sending function at the first communication device 410 described in the DL, the controller/processor 459 implements header compression, encryption, packet segmentation and reordering, and multiplexing between logical and transmission channels based on the radio resource assignment of the first communication device 410, and implements L2 layer functions for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing; and then, the transmitting processor 468 modulates a generated parallel stream into a multi-carrier/single-carrier symbol stream, which is provided to different antennas 452 via the transmitting device 454 after undergoing analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, the functions at the first communication device 410 are similar to the receiving functions at the second communication device 450 described in the transmission from the first communication device 410 to the second communication device 450. Each receiving device 418 receives a radio-frequency signal through a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transmission and logical channels, packet reassembly, decryption, header decompression and control signal processing to recover upper-layer data packets from the second communication device 450. The upper-layer data packets from the controller/processor 475 may be provided to the core network. The controller/processor 475 is also responsible for error detection using the ACK and/or NACK protocol to support HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least: receives a first CSI reporting configuration, wherein the first CSI reporting configuration comprises a first RS resource set, and the first RS resource set comprises one or more RS resources; receives a first information block, wherein the first information block is used for indicating a first power control offset; and sends first CSI reporting, wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, the second communication device 450 comprises: a memory storing a computer-readable instruction program, the computer-readable instruction program generating an action when executed by at least one processor, and the action comprising: receiving a first CSI reporting configuration, wherein the first CSI reporting configuration comprises a first RS resource set, and the first RS resource set comprises one or more RS resources; receiving a first information block, wherein the first information block is used for indicating a first power control offset; and sending first CSI reporting, wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, the ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least: sends a first CSI reporting configuration, wherein the first CSI reporting configuration comprises a first RS resource set, and the first RS resource set comprises one or more RS resources; sends a first information block, wherein the first information block is used for indicating a first power control offset; and receives the first CSI reporting, wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, the first communication device 410 comprises: a memory storing a computer-readable instruction program, the computer-readable instruction program generates actions when executed by at least one processor, the action comprising: sending the first CSI reporting configuration, wherein the first CSI reporting configuration comprises a first RS resource set, and the first RS resource set comprises one or more RS resources; sending a first information block, wherein the first information block is used for indicating a first power control offset; and receiving the first CSI reporting, wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, the ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first CSI reporting configuration in the present application; and at least one of {the antenna 420, the transmitting device 418, the transmitting processor 416, the multi-antenna transmitting processor 471, the controller/-processor 475, and the memory 476} is used for sending the first CSI reporting configuration in the present application.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the receiving device 454, the receiving processor 456, the multi-antenna receiving processor 458, the controller/processor 459, the memory 460, and the data source 467} is used for receiving the third information block in the present application; and at least one of {the antenna 420, the transmitting device 418, the transmitting processor 416, the multi-antenna transmitting processor 471, the controller/processor 475, and the memory 476} is used for sending the third information block in the present application.

As one embodiment, at least one of {the antenna 452, the transmitting device 454, the transmitting processor 468, the multi-antenna transmitting processor 457, the controller/processor 459, and the memory 460} is used for sending the first CSI reporting in the present application; and at least one of {the antenna 420, the receiving device 418, the receiving processor 470, the multi-antenna receiving processor 472, the controller/processor 475, and the memory 476} is used for receiving the first CSI reporting in the present application.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least: receives a first CSI reporting configuration, wherein the first CSI reporting configuration comprises a first RS resource set, and the first RS resource set comprises one or more RS resources; receives a first information block, wherein the first information block is used for indicating a first power control offset; and sends first CSI reporting, wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, the ratio of PDSCH EPRE to first CSI-RS EPRE is equal to the first power control offset; and the first CSI-RS EPRE depends on the CSI reference resource of the first CSI reporting.

As one embodiment, the second communication device 450 comprises: a memory storing a computer-readable instruction program, the computer-readable instruction program generating an action when executed by at least one processor, and the action comprising: receiving a first CSI reporting configuration, wherein the first CSI reporting configuration comprises a first RS resource set, and the first RS resource set comprises one or more RS resources; receiving a first information block, wherein the first information block is used for indicating a first power control offset; and sending first CSI reporting, wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

As one embodiment, the first communication device 410 comprises: at least one processor and at least one memory, the at least one memory comprising computer program codes; and the at least one memory and the computer program code are configured to be used together with the at least one processor. The first communication device 410 apparatus at least: sends a first CSI reporting configuration, wherein the first CSI reporting configuration comprises a first RS resource set, and the first RS resource set comprises one or more RS resources; sends a first information block, wherein the first information block is used for indicating a first power control offset; and receives the first CSI reporting, wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, the ratio of PDSCH EPRE to first CSI-RS EPRE is equal to the first power control offset; and the first CSI-RS EPRE depends on the CSI reference resource of the first CSI reporting.

As one embodiment, the first communication device 410 comprises: a memory storing a computer-readable instruction program, the computer-readable instruction program generating an action when executed by at least one processor, and the action comprising: sending a first CSI reporting configuration, wherein the first CSI reporting configuration comprises a first RS resource set, and the first RS resource set comprises one or more RS resources; sending a first information block, wherein the first information block is used for indicating a first power control offset; and receiving the first CSI reporting, wherein a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first CSI reporting configuration in the present application; and at least one of {the antenna 420, the transmitting device 418, the transmitting processor 416, the multi-antenna transmitting processor 471, the controller/-processor 475, and the memory 476} is used for sending the first CSI reporting configuration in the present application.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the receiving device 454, the receiving processor 456, the multi-antenna receiving processor 458, the controller/processor 459, the memory 460, and the data source 467} is used for receiving the third information block in the present application; and at least one of {the antenna 420, the transmitting device 418, the transmitting processor 416, the multi-antenna transmitting processor 471, the controller/processor 475, and the memory 476} is used for sending the third information block in the present application.

As one embodiment, at least one of {the antenna 452, the transmitting device 454, the transmitting processor 468, the multi-antenna transmitting processor 457, the controller/processor 459, and the memory 460} is used for sending the first CSI reporting in the present application; and at least one of {the antenna 420, the receiving device 418, the receiving processor 470, the multi-antenna receiving processor 472, the controller/processor 475, and the memory 476} is used for receiving the first CSI reporting in the present application.

**Embodiment 5A**

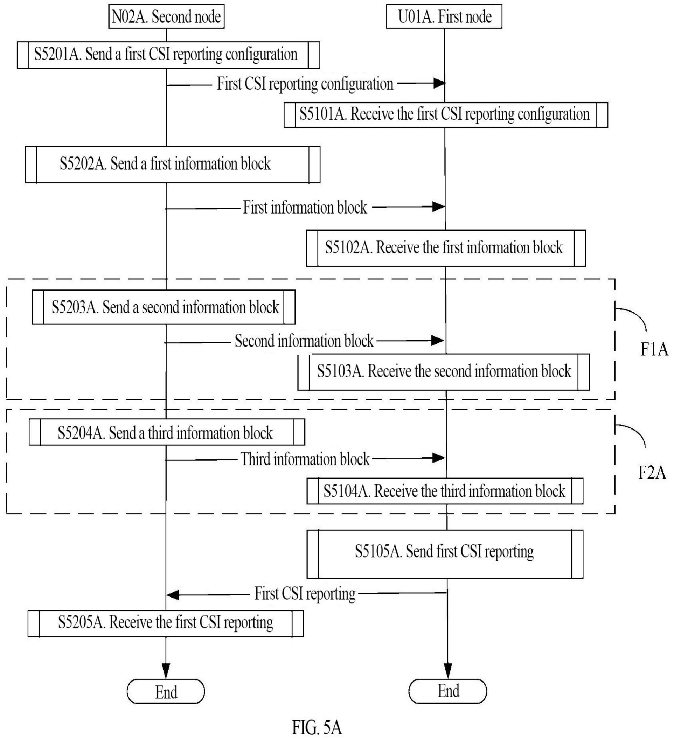

Embodiment 5A illustrates a flowchart of wireless transmission according to one embodiment of the present application, as shown in FIG. 5A. In the FIG. 5A, a first node U01A and a second node N02A are two communication nodes transmitted through an air interface, respectively, wherein the steps in blocks F1A and F2A are optional.

For **the first node U01A,** a first CSI reporting configuration is received in step S5101A; a first information block is received in step S5102A; a second information block is received in step S5103A; a third information block is received in step S5104A; first CSI reporting is sent in step S5105A; and

for **the second node N02A,** a first CSI reporting configuration is sent in step S5201A; a first information block is sent in step S5202A; a second information block is sent in step S5203A; third information block is sent in step S5204A; and first CSI reporting is received in step S5205A.

In Embodiment 5A, the first CSI reporting configuration comprises a first RS resource set, wherein the first RS resource set comprises one or more RS resources; the first information block is used for indicating a first power control offset; and a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE. The second information block is used for indicating the target power control offset, and the target power control offset is equal to the ratio of the first CSI-RS EPRE to the SS/PBCH block EPRE. The third information block is used for indicating the reference power control offset, and the reference power control offset is equal to the ratio of the EPRE in one transmission occasion of the first CSI-RS resource in the first occasion set to the SS/PBCH block EPRE.

As one embodiment, the second information block comprises one field in IE NZP-CSI-RS-Resource.

As one embodiment, the second information block comprises one or more fields in one RRC IE.

As one embodiment, the second information block comprises one field in one RRC IE.

As one embodiment, the name of the second information block comprises powerControlOffsetSS.

As one embodiment, the target power control offset is a non-negative real number.

As one embodiment, the target power control offset is a positive real number.

As one embodiment, the dB (deciBel) value of the target power control offset is an integer.

As one embodiment, the value range of the dB (deciBel) value of the target power control offset comprises at least one of -3, 0, 3, or 6.

As one embodiment, the value range of the dB (deciBel) value of the target power control offset at least comprises -3, 0, 3, or 6.

Typically, the target power control offset is b, and the dB value of the first power control offset is $10log_{10}(b)$.

Typically, the unit of the dB value of the target power control offset is dB.

As one embodiment, the second information block is carried by a higher layer signaling.

As one embodiment, the second information block is carried by an RRC signaling.

As one embodiment, the second information block is carried by an MAC CE signaling.

As one embodiment, the second information block is carried by a physical layer signaling.

As one embodiment, the second information block is carried by a DCI signaling.

As one embodiment, the first information block and the second information block are carried by the same signaling.

As one embodiment, the first information block and the second information block are carried by the same RRC signaling.

As one embodiment, the first information block and the second information block are respectively carried by different RRC signalings.

As one embodiment, the first information block and the second information block are respectively carried by different signalings.

As one embodiment, the second information block belongs to configuration information of the first CSI-RS resource.

As one embodiment, both the first information block and the second information block belong to configuration information of the first CSI-RS resource.

As one embodiment, the third information block comprises one field in IE NZP-CSI-RS-Resource.

As one embodiment, the third information block comprises one or more fields in one RRC IE.

As one embodiment, the third information block comprises one field in one RRC IE.

As one embodiment, the name of the third information block comprises powerControlOffsetSS.

As one embodiment, the reference power control offset is a non-negative real number.

As one embodiment, the reference power control offset is a positive real number.

As one embodiment, the dB (deciBel) value of the reference power control offset is an integer.

As one embodiment, the value range of the dB (deciBel) value of the reference power control offset comprises at least one of -3, 0, 3, or 6.

As one embodiment, the value range of the dB (deciBel) value of the reference power control offset at least comprises -3, 0, 3, or 6.

Typically, the reference power control offset is c, and the dB value of the first power control offset is $10log_{10}(c)$.

Typically, the unit of the dB value of the reference power control offset is dB.

As one embodiment, the reference power control offset is different from the target power control offset.

As one embodiment, the third information block is carried by a higher layer signaling.

As one embodiment, the third information block is carried by an RRC signaling.

As one embodiment, the third information block is carried by an MAC CE signaling.

As one embodiment, the third information block is carried by a physical layer signaling.

As one embodiment, the third information block is carried by a DCI signaling.

As one embodiment, the third information block belongs to configuration information of the first CSI-RS resource.

As one embodiment, the first information block is received earlier than the second information block and the third information block.

As one embodiment, the first information block is received no earlier than the second information block and the third information block.

As one embodiment, the first information block is received later than the second information block and the third information block.

As one embodiment, the second information block is received earlier than the first information block and the third information block.

As one embodiment, the second information block is received earlier than the third information block.

As one embodiment, the second information block is received no earlier than the third information block.

As one embodiment, the second information block is received later than the third information block.

As one embodiment, both the second information block and the third information block are carried by a higher layer signaling.

As one embodiment, both the second information block and the third information block are carried by an RRC signaling.

As one embodiment, both the second information block and the third information block are carried by an MAC CE signaling.

As one embodiment, the second information block and the third information block are carried by the same RRC signaling.

As one embodiment, the second information block and the third information block are carried by the same MAC CE signaling.

As one embodiment, the second information block is carried by an RRC signaling, and the third information block is carried by an MAC CE signaling.

As one embodiment, the second information block is carried by an RRC signaling, and the third information block is carried by a physical layer signaling.

As one embodiment, the second information block is carried by an RRC signaling, and the third information block is carried by a DCI signaling.

As one embodiment, the second information block is carried by an MAC CE signaling, and the third information block is carried by a DCI signaling.

As one embodiment, the second information block and the third information block are carried by two MAC CEs, respectively.

As one embodiment, the second information block and the third information block are carried by two physical layer signalings, respectively.

As one embodiment, the second information block and the third information block are carried by two DCI signalings, respectively.

As one embodiment, the reference power control offset is equal to the ratio of the EPRE in the first transmission occasion of the first CSI-RS resource to the SS/PBCH block EPRE.

As one embodiment, the reference power control offset is equal to the ratio of the EPRE in the most recent transmission occasion of the first CSI-RS resource in the first occasion set to the SS/PBCH block EPRE.

As one embodiment, the reference power control offset is equal to the ratio of the EPRE in any transmission occasion of the first CSI-RS resource in the first occasion set to the SS/PBCH block EPRE.

As one embodiment, the reference power control offset is equal to the ratio of the EPRE in the first transmission occasion of the first CSI-RS resource to the SS/PBCH block EPRE, wherein the first transmission occasion is one transmission occasion of the first CSI-RS resource in the first occasion set.

As one embodiment, the EPRE in the first transmission occasion of the first CSI-RS resource is different from the first CSI-RS EPRE.

### Embodiment 5B

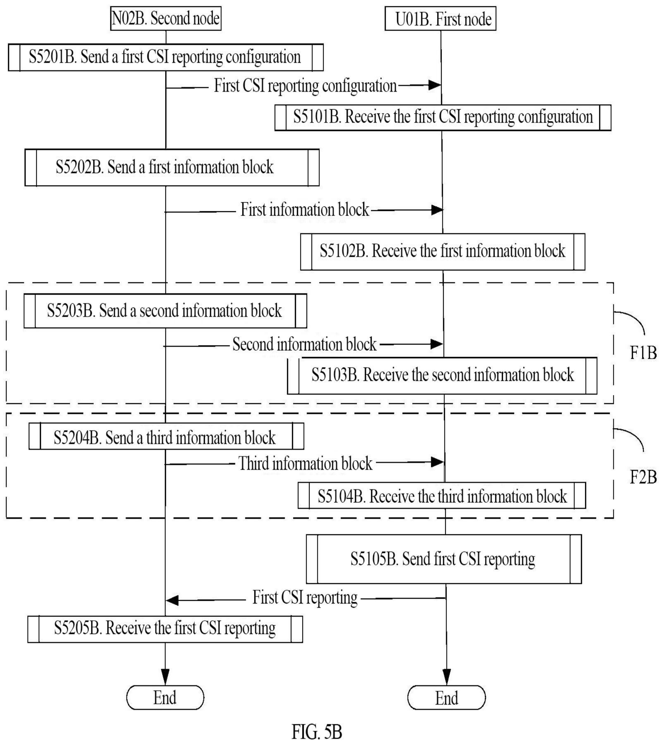

Embodiment 5B illustrates a flowchart of wireless transmission according to one embodiment of the present application, as shown in FIG. 5B. In FIG. 5B, a first node U01B and a second node N02B are two communication nodes transmitted through an air interface, respectively, wherein steps in blocks F1B and F2B are optional.

For **the first node U01B,** a first CSI reporting configuration is received in step S5101B; a first information block is received in step S5102B; a second information block is received in step S5103B; a third information block is received in step S5104B; first CSI reporting is sent in step S5105B;

for **the second node N02B,** a first CSI reporting configuration is sent in step S5201B; a first information block is sent in step S5202B; a second information block is sent in step S5203B; third information block is sent in step S5204B; and first CSI reporting is received in step S5205B.

In Embodiment 5B, the first CSI reporting configuration comprises a first RS resource set, wherein the first RS resource set comprises one or more RS resources; the first information block is used for indicating a first power control offset; and a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting. The second information block and the third information block are respectively used for indicating the ratios of EPRE in two transmission occasions respectively of one CSI-RS resource in the first RS resource set to the SS/PBCH block EPRE.

As one embodiment, the second information block is carried by a higher layer signaling.

As one embodiment, the second information block is carried by an RRC signaling.

As one embodiment, the second information block is carried by an MAC CE signaling.

As one embodiment, the second information block is carried by a physical layer signaling.

As one embodiment, the second information block is carried by a DCI signaling.

As one embodiment, the third information block is carried by a higher layer signaling.

As one embodiment, the third information block is carried by an RRC signaling.

As one embodiment, the third information block is carried by an MAC CE signaling.

As one embodiment, the third information block is carried by a physical layer signaling.

As one embodiment, the third information block is carried by a DCI signaling.

As one embodiment, the first information block is received earlier than the second information block and the third information block.

As one embodiment, the first information block is received no earlier than the second information block and the third information block.

As one embodiment, the first information block is received later than the second information block and the third information block.

As one embodiment, the second information block is received earlier than the first information block and the third information block.

As one embodiment, the second information block is received earlier than the third information block.

As one embodiment, the first information block and the second information block are carried by the same signaling.

As one embodiment, the first information block and the second information block are carried by the same RRC signaling.

As one embodiment, the first information block and the second information block are respectively carried by different RRC signalings.

As one embodiment, the first information block and the second information block are respectively carried by different signalings.

As one embodiment, the second information block is carried by an RRC signaling, and the third information block is carried by an MAC CE signaling.

As one embodiment, the second information block is carried by an RRC signaling, and the third information block is carried by a physical layer signaling.

As one embodiment, the second information block is carried by an RRC signaling, and the third information block is carried by a DCI signaling.

As one embodiment, the second information block is carried by an MAC CE signaling, and the third information block is carried by a DCI signaling.

As one embodiment, the second information block and the third information block are carried by two MAC CEs, respectively.

As one embodiment, the second information block and the third information block are carried by two physical layer signalings, respectively.

As one embodiment, the second information block and the third information block are carried by two DCI signalings, respectively.

As one embodiment, the second information block and the third information block are respectively used for indicating the ratios of EPRE in two groups of transmission occasions respectively of one CSI-RS resource in the first RS resource set to the SS/PBCH block EPRE.

As one embodiment, the second information block and the third information block are respectively used for indicating the ratios of EPRE in two transmission occasions respectively of the first CSI-RS resource to the SS/PBCH block EPRE.

## Embodiment 6A

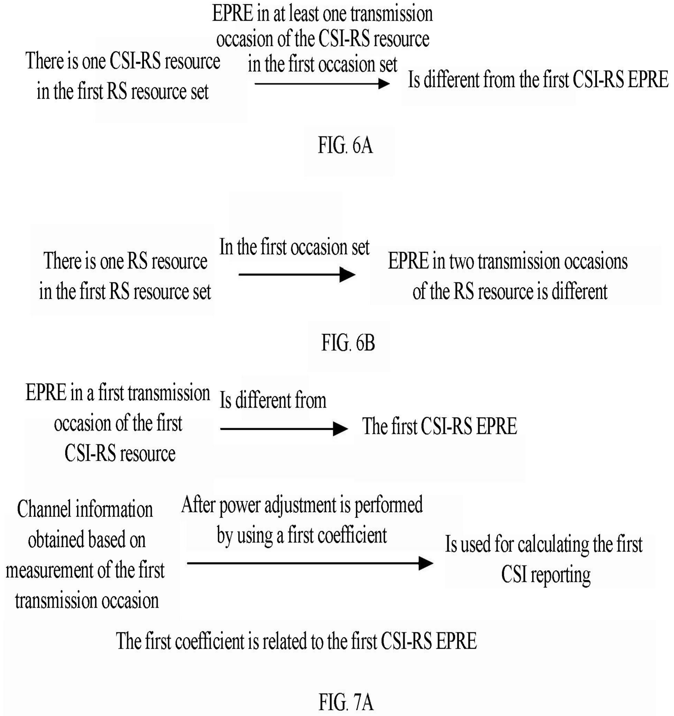

Embodiment 6A illustrates a schematic diagram of a relationship between a first RS resource set and a first CSI-RS EPRE according to one embodiment of the present application, as shown in FIG. 6A.

In Embodiment 6A, there is one CSI-RS resource in the first RS resource set that has EPRE that is different from the first CSI-RS EPRE in at least one transmission occasion of the CSI-RS resource in the first occasion set.

As one embodiment, in the first occasion set, the EPRE in at least one transmission occasion of at least one CSI-RS resource in the first RS resource set is different from the first CSI-RS EPRE.

As one embodiment, there is one CSI-RS resource in the first RS resource set that has EPRE that is different in two transmission occasions of the CSI-RS resource in the first occasion set.

As one embodiment, there is one CSI-RS resource in the first RS resource set that has EPRE that are the same in all transmission occasions of the CSI-RS resource in the first occasion set.

As one embodiment, the EPRE of any CSI-RS resource in the first RS resource set in all transmission occasions of the CSI-RS resource in the first occasion set is the same.

## Embodiment 6B

Embodiment 6B illustrates a schematic diagram of EPRE of an RS resource in a first RS resource set according to one embodiment of the present application, as shown in FIG. 6B.

In Embodiment 6B, there is one RS resource in the first RS resource set that has EPRE that is different in two transmission occasions of the RS resource in the first occasion set.

As one embodiment, the first CSI reporting indicates a first CSI-RS resource, the first CSI-RS resource is one RS resource in the first RS resource set, and EPRE in two transmission occasions of the first CSI-RS resource in the first occasion set is different.

As one embodiment, the first CSI reporting indicates a first CSI-RS resource, the first CSI-RS resource is one RS resource in the first RS resource set, and EPRE in its two transmission occasions of the first CSI-RS resource is different.

## Embodiment 7A

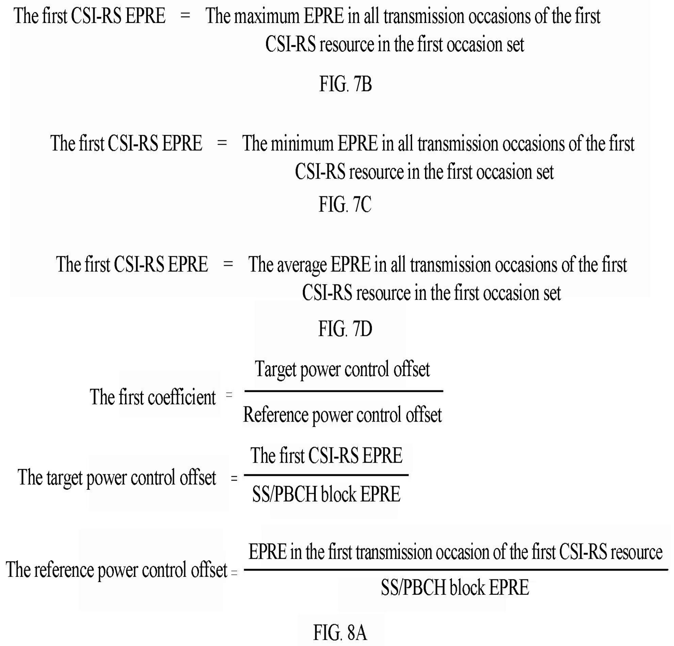

FIG. 7A illustrates a schematic diagram of a relationship between a calculation of first CSI reporting and a first coefficient according to one embodiment of the present application, as shown in FIG. 7A.

In Embodiment 7A, EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

As one embodiment, the EPRE in two transmission occasions of the first CSI-RS resource in the first occasion set is different.

As one embodiment, the EPRE in all transmission occasions of the first CSI-RS resource in the first occasion set are the same.

As one embodiment, the first coefficient is a positive real number.

As one embodiment, the first transmission occasion is the most recent transmission occasion of the first CSI-RS resource in the first occasion set.

As one embodiment, the first transmission occasion is not the most recent transmission occasion of the first CSI-RS resource in the first occasion set.

As one embodiment, the meaning of the sentence "the first coefficient is related to the first CSI-RS EPRE" comprises: the first coefficient is linearly related to the first CSI-RS EPRE.

As one embodiment, the meaning of the sentence "the first coefficient is related to the first CSI-RS EPRE" comprises: the first coefficient is equal to the ratio of the first CSI-RS EPRE to the EPRE in the first transmission occasion of the first CSI-RS resource.

As one embodiment, the meaning of the sentence "the first coefficient is related to the first CSI-RS EPRE" comprises: the first coefficient is equal to the ratio of a target power control offset to a reference power control offset, the target power control offset is equal to the ratio of the first CSI-RS EPRE to SS/PBCH block EPRE, and the reference power control offset is equal to the ratio of the EPRE in the first transmission occasion of the first CSI-RS resource to the SS/PBCH block EPRE.

As one embodiment, the power adjustment is performed by multiplying the channel information obtained based on the measurement of the first transmission occasion by the square root of the first coefficient.

As one embodiment, the power adjustment is performed by multiplying the power of the channel information obtained based on the measurement of the first transmission occasion by the square root of the first coefficient.

Under the limitations of the above methods or embodiments, how to use the first coefficient to perform power adjustment on the channel information obtained based on the measurement of the first transmission occasion is determined by the manufacturer of the first node independently, or is implementation-related. A typical but non-restrictive implementation is described below:

The first node obtains a channel parameter matrix $\hat{H}_{r \times t}$ for the measurement of the first transmission occasion of the first CSI-RS resource, wherein $r$, $t$ are the number of receiving antennas and the number of antenna ports of the first CSI-RS resource, respectively; and power adjustment is performed on the channel parameter matrix $\hat{H}_{r \times t}$, and the adjusted channel parameter matrix $\hat{H}_{r \times t}$ is $\sqrt{Q} \cdot \hat{H}_{r \times t}$, wherein Q is the first coefficient.

## Embodiments 7B-7D

Embodiments 7B-7D respectively illustrate a schematic diagram of a first CSI-RS EPRE according to one embodiment of the present application, as shown in FIGs. 7B-7D.

In Embodiment 7B, the first CSI reporting indicates the first CSI-RS resource, wherein the first CSI-RS resource is one CSI-RS resource in the first RS resource set; and the first CSI-RS EPRE is equal to the maximum EPRE in all transmission occasions of the first CSI-RS resource in the first occasion set.

In Embodiment 7C, the first CSI reporting indicates the first CSI-RS resource, wherein the first CSI-RS resource is one CSI-RS resource in the first RS resource set; and the first CSI-RS EPRE is equal to the minimum EPRE in all transmission occasions of the first CSI-RS resource in the first occasion set.

In Embodiment 7D, the first CSI reporting indicates the first CSI-RS resource, wherein the first CSI-RS resource is one CSI-RS resource in the first RS resource set; and the first CSI-RS EPRE is equal to the average EPRE in all transmission occasions of the first CSI-RS resource in the first occasion set.

As one embodiment, selecting the first CSI-RS resource from the first RS resource set is determined by the first node independently, or is implementation-related.

As one embodiment, selecting the first CSI-RS resource from the first RS resource set is based on certain criteria, such as the maximum capacity, the maximum SINR, etc.

As one embodiment, the first CSI-RS EPRE is equal to the maximum EPRE in all transmission occasions of the first CSI-RS resource in the first occasion set.

As one embodiment, the first CSI-RS EPRE is equal to the minimum EPRE in all transmission occasions of the first CSI-RS resource in the first occasion set.

As one embodiment, the first CSI-RS EPRE is equal to the average EPRE in all transmission occasions of the first CSI-RS resource in the first occasion set.

## Embodiment 8A

Embodiment 8A illustrates a schematic diagram of a first coefficient according to one embodiment of the present application, as shown in FIG. 8A.

In Embodiment 8A, the first coefficient is equal to a ratio of a target power control offset to a reference power control offset, the target power control offset is equal to a ratio of the first CSI-RS EPRE to SS/PBCH block EPRE, and the reference power control offset is equal to a ratio of the EPRE in the first transmission occasion of the first CSI-RS resource to the SS/PBCH block EPRE.

As one embodiment, the target power control offset is indicated by an MAC CE signaling.

As one embodiment, the target power control offset is indicated by a physical layer signaling.

As one embodiment, the target power control offset is indicated by a DCI signaling.

As one embodiment, the target power control offset and the first power control offset are indicated by the same signaling.

As one embodiment, the target power control offset and the first power control offset are indicated by different signalings.

As one embodiment, the target power control offset and the first power control offset are indicated by the same DCI signaling.

As one embodiment, the configuration information of the first CSI-RS resource comprises the reference power control offset.

As one embodiment, the configuration information of the first CSI-RS resource is configured by one IE NZP-CSI-RS-Resource.

As one embodiment, the configuration information of one CSI-RS resource is configured by one IE NZP-CSI-RS-Resource.

As one embodiment, the reference power control offset is indicated by a higher layer parameter, and the name of the higher layer parameter indicating the reference power control offset comprises powerControlOffsetSS.

As one embodiment, the reference power control offset is indicated by an MAC CE signaling.

As one embodiment, the reference power control offset is indicated by a physical layer signaling.

As one embodiment, the reference power control offset is indicated by a DCI signaling.

## Embodiment 8B

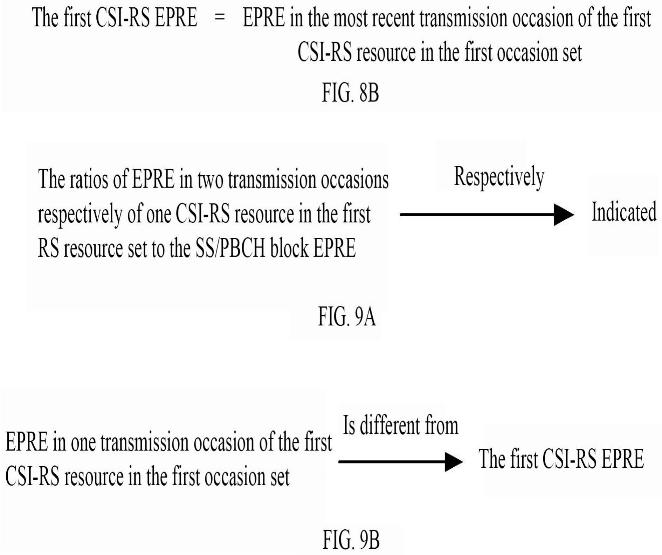

Embodiment 8B illustrates a schematic diagram of a first CSI-RS EPRE according to another embodiment of the present application, as shown in FIG. 8B.

In Embodiment 8B, the first CSI reporting indicates a first CSI-RS resource, the first CSI-RS resource is one RS resource in the first RS resource set, and the first CSI-RS EPRE is equal to EPRE in the most recent transmission occasion of the first CSI-RS resource in the first occasion set.

As one embodiment, the most recent transmission occasion refers to: the latest transmission occasion.

As one embodiment, the most recent transmission occasion refers to: the latest transmission occasion.

As one embodiment, the most recent transmission occasion refers to: one transmission occasion that is closest in time to the CSI reference resource of the first CSI reporting.

As one embodiment, the EPRE in a non-recent transmission occasion of the first CSI-RS resource in the first occasion set is different from the first CSI-RS EPRE.

## Embodiment 9A

Embodiment 9A illustrates a schematic diagram of EPRE of one CSI-RS resource in a first RS resource set according to one embodiment of the present application, as shown in FIG. 9A.

In Embodiment 9A, the ratios of EPRE in two transmission occasions respectively of one CSI-RS resource in the first RS resource set to the SS/PBCH block EPRE are respectively indicated.

As one embodiment, the ratios of EPRE in two groups of transmission occasions respectively of one CSI-RS resource in the first RS resource set to the SS/PBCH block EPRE are respectively indicated.

As one embodiment, the ratios of EPRE in two transmission occasions respectively of one CSI-RS resource in the first RS resource set to the SS/PBCH block EPRE are respectively indicated by different signalings.

As one embodiment, the ratios of the EPRE in the respective transmission occasions of two CSI-RS resources in the first RS resource set to the SS/PBCH block EPRE are respectively indicated.

### Embodiment 9B

Embodiment 9B illustrates a schematic diagram of EPRE of a first CSI-RS resource according to one embodiment of the present application, as shown in FIG. 9B.

In Embodiment 9B, the first CSI reporting indicates the first CSI-RS resource, wherein the first CSI-RS resource is one RS resource in the first RS resource set, and EPRE in one transmission occasion of the first CSI-RS resource in the first occasion set is different from the first CSI-RS EPRE.

As one embodiment, the first CSI-RS resource comprises at least one transmission occasion in the first occasion set.

As one embodiment, the first CSI-RS resource comprises a plurality of transmission occasions in the first occasion set.

As one embodiment, the first CSI-RS resource comprises only one transmission occasion in the first occasion set.

As one embodiment, the first CSI-RS resource comprises a plurality of transmission occasions in the first occasion set, and the EPRE in two transmission occasions of the first CSI-RS resource in the first occasion set is different.

### Embodiment 10A

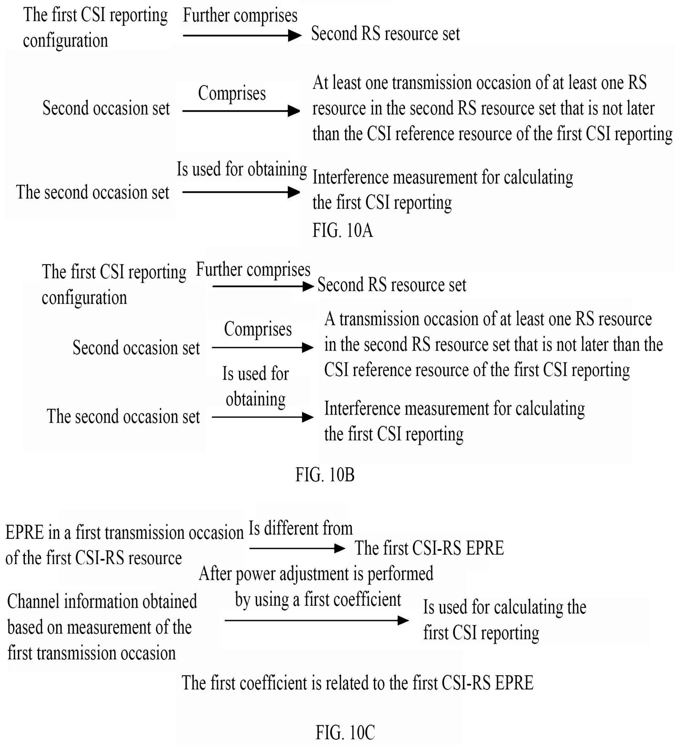

Embodiment 10A illustrates a schematic diagram of a second RS resource set according to one embodiment of the present application, as shown in FIG. 10A.

In Embodiment 10A, the first CSI reporting configuration further comprises a second RS resource set, wherein the second RS resource set comprises one or more RS resources; and a second occasion set comprises at least one transmission occasion of at least one RS resource in the second RS resource set that is not later than the CSI reference resource of the first CSI reporting, and the second occasion set is used for obtaining interference measurement for calculating the first CSI reporting.

As one embodiment, an interference measurement resource of the first CSI reporting configuration comprises the second RS resource set.

As one embodiment, the second RS resource set is used for interference measurement of the first CSI reporting.

As one embodiment, the second RS resource set comprises a plurality of RS resources configured for the interference measurement.

As one embodiment, the second RS resource set comprises at least one of a CSI-IM (Channel State Information-Interference Measurement) resource or an NZP CSI-RS resource used for interference measurement.

As one embodiment, the second RS resource set comprises a CSI-IM (Channel State Information-Interference Measurement) resource or at least a CSI-IM resource in an NZP CSI-RS resource used for interference measurement.

As one embodiment, the second RS resource set comprises a CSI-IM resource.

As one embodiment, the second RS resource set comprises a CSI-IM resource and an NZP CSI-RS resource used for interference measurement.

Typically, CSI-IM is a zero-power reference signal.

As one embodiment, the first CSI reporting configuration comprises two CSI resource configurations, and the two CSI resource configurations are respectively used for configuring the first RS resource set and the second RS resource set.

As one sub-embodiment of the above embodiment, the two CSI resource configurations are two IE CSI-ResourceConfigs.

As one sub-embodiment of the above embodiment, the first CSI reporting configuration comprises a resourcesForChannelMeasurement field and a csi-IM-ResourcesForInterference field, and the resourcesForChannelMeasurement field and the csi-IM-ResourcesForInterference field included in the first CSI reporting configuration respectively indicate the two CSI resource configurations.

As one embodiment, the first CSI reporting configuration comprises a csi-IM-ResourcesForInterference field, and the csi-IM-ResourcesForInterference field included in the first CSI reporting configuration is used for indicating the second RS resource configuration.

As one embodiment, the first CSI reporting configuration comprises three CSI resource configurations, and the three CSI resource configurations are respectively used for configuring the first RS resource set, the CSI-IM resource in the second RS resource set, and the NZP CSI-RS resource configured for interference measurement in the second RS resource set.

As one sub-embodiment of the above embodiment, the three CSI resource configurations are three IE CSI-ResourceConfigs.

As one sub-embodiment of the above embodiment, the first CSI reporting configuration comprises a resourcesForChannelMeasurement field, a csi-IM-ResourcesForInterference field, and an nzp-CSI-RS-ResourcesForInterference field, and the resourcesForChannelMeasurement field, the csi-IM-ResourcesForInterference field, and the nzp-CSI-RS-ResourcesForInterference field included in the first CSI reporting configuration respectively indicate the three CSI resource configurations.

As one embodiment, the first CSI reporting configuration comprises a csi-IM-ResourcesForInterference field and an nzp-CSI-RS- ResourcesForInterference field, and the csi-IM-ResourcesForInterference field and the nzp-CSI-RS-ResourcesForInterference included in the first CSI reporting configuration are used for indicating the second RS resource set.

As one embodiment, the specific definitions of IE CSI-ReportConfig, resourcesForChannelMeasurement, csi-IM- ResourcesForInterference, nzp-CSI-RS-ResourcesForInterference, and IE CSI-ResourceConfi refer to Section 6.3.2 of 3GPP TS 38.331.

As one embodiment, only the second occasion set in all transmission occasions of each RS resource in the second RS resource set is used for obtaining interference measurement for calculating the first CSI reporting.

As one embodiment, the first occasion set comprises the most recent transmission occasion of at least the first CSI-RS resource in the first RS resource set that is not later than the CSI reference resource of the first CSI reporting; and the second occasion set comprises the most recent transmission occasion of at least one RS resource in the second RS resource set that is not later than the CSI reference resource of the first CSI reporting.

As one sub-embodiment of the above embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"configured".*

As one embodiment, the first occasion set comprises all transmission occasions of at least the first CSI-RS resource in the first RS resource set that are not later than the CSI reference resource of the first CSI reporting; and the second occasion set comprises all transmission occasions of at least one RS resource in the second RS resource set that are not later than the CSI reference resource of the first CSI reporting.

As one sub-embodiment of the above embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"notConfigured".*

As one embodiment, the first occasion set comprises the most recent transmission occasion of each RS resource in the first RS resource set that is not later than the CSI reference resource of the first CSI reporting; and the second occasion set comprises the most recent transmission occasion of each RS resource in the second RS resource set that is not later than the CSI reference resource of the first CSI reporting.

As one sub-embodiment of the above embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"configured".*

As one embodiment, the first occasion set comprises at least one transmission occasion of each RS resource in the first RS resource set that is not later than the CSI reference resource of the first CSI reporting; and the second occasion set comprises at least one transmission occasion of each RS resource in the second RS resource set that is not later than the CSI reference resource of the first CSI reporting.

As one embodiment, the first occasion set comprises all transmission occasions of each RS resource in the first RS resource set that are not later than the CSI reference resource of the first CSI reporting; and the second occasion set comprises all transmission occasion of each RS resource in the second RS resource set that are not later than the CSI reference resource of the first CSI reporting.

As one sub-embodiment of the above embodiment, the first CSI reporting configuration comprises a higher layer parameter *timeRestrictionForChannelMeasurements,* and the higher layer parameter *timeRestrictionForChannelMeasurements* in the first CSI reporting configuration is set to *"notConfigured".*


## Embodiment 10B

Embodiment 10B illustrates a schematic diagram of a second RS resource set according to one embodiment of the present application, as shown in FIG. 10B.

In Embodiment 10B, the first CSI reporting configuration further comprises a second RS resource set, and the second RS resource set comprises one or more RS resources; and a second occasion set comprises a transmission occasion of at least one RS resource in the second RS resource set that is not later than the CSI reference resource of the first CSI reporting, and the second occasion set is used for obtaining interference measurement for calculating the first CSI reporting.

As one embodiment, an interference measurement resource of the first CSI reporting configuration comprises the second RS resource set.

As one embodiment, the second RS resource set is used for interference measurement of the first CSI reporting.

As one embodiment, the second RS resource set comprises a plurality of RS resources configured for the interference measurement.

As one embodiment, the second RS resource set comprises at least one of a CSI-IM (Channel State Information-Interference Measurement) resource or an NZP CSI-RS resource used for interference measurement.

As one embodiment, the second RS resource set comprises a CSI-IM (Channel State Information-Interference Measurement) resource or at least a CSI-IM resource in an NZP CSI-RS resource used for interference measurement.

As one embodiment, the second RS resource set comprises a CSI-IM resource.

As one embodiment, the second RS resource set comprises a CSI-IM resource and an NZP CSI-RS resource used for interference measurement.

Typically, CSI-IM is a zero-power reference signal.

As one embodiment, the first CSI reporting configuration comprises two CSI resource configurations, and the two CSI resource configurations are respectively used for configuring the first RS resource set and the second RS resource set.

As one sub-embodiment of the above embodiment, the two CSI resource configurations are two IE CSI-ResourceConfigs.

As one sub-embodiment of the above embodiment, the first CSI reporting configuration comprises a resourcesForChannelMeasurement field and a csi-IM-ResourcesForInterference field, and the resourcesForChannelMeasurement field and the csi-IM-ResourcesForInterference field included in the first CSI reporting configuration respectively indicate the two CSI resource configurations.

As one embodiment, the first CSI reporting configuration comprises a csi-IM-ResourcesForInterference field, and the csi-IM-ResourcesForInterference field included in the first CSI reporting configuration is used for indicating the second RS resource configuration.

As one embodiment, the first CSI reporting configuration comprises three CSI resource configurations, and the three CSI resource configurations are respectively used for configuring the first RS resource set, the CSI-IM resource in the second RS resource set, and the NZP CSI-RS resource configured for interference measurement in the second RS resource set.

As one sub-embodiment of the above embodiment, the three CSI resource configurations are three IE CSI-ResourceConfigs.

As one sub-embodiment of the above embodiment, the first CSI reporting configuration comprises a resourcesForChannelMeasurement field, a csi-IM-ResourcesForInterference field, and an nzp-CSI-RS-ResourcesForInterference field, and the resourcesForChannelMeasurement field, the csi-IM-ResourcesForInterference field, and the nzp-CSI-RS-ResourcesForInterference field included in the first CSI reporting configuration respectively indicate the three CSI resource configurations.

As one embodiment, the first CSI reporting configuration comprises a csi-IM-ResourcesForInterference field and an nzp-CSI-RS- ResourcesForInterference field, and the csi-IM-ResourcesForInterference field and the nzp-CSI-RS-ResourcesForInterference included in the first CSI reporting configuration are used for indicating the second RS resource set.

As one embodiment, the specific definitions of IE CSI-ReportConfig, resourcesForChannelMeasurement, csi-IM- ResourcesForInterference, nzp-CSI-RS-ResourcesForInterference, and IE CSI-ResourceConfi refer to Section 6.3.2 of 3GPP TS 38.331.

As one embodiment, only the second occasion set in all transmission occasions of each RS resource in the second RS resource set is used for obtaining interference measurement for calculating the first CSI reporting.

As one embodiment, the second occasion set comprises one or more transmission occasions of at least one RS resource in the second RS resource set that are not later than the CSI reference resource of the first CSI reporting.

As one embodiment, the second occasion set comprises all transmission occasions of at least one RS resource in the second RS resource set that are not later than the CSI reference resource of the first CSI reporting.

As one embodiment, the second occasion set comprises a transmission occasion of each RS resource in the second RS resource set that is not later than the CSI reference resource of the first CSI reporting.

As one embodiment, the second occasion set comprises one or more transmission occasions of each RS resource in the second RS resource set that are not later than the CSI reference resource of the first CSI reporting.

As one embodiment, the second occasion set comprises all transmission occasions of each RS resource in the second RS resource set that are not later than the CSI reference resource of the first CSI reporting.

## Embodiments 10C

Embodiment 10C illustrates a schematic diagram of a calculation of first CSI reporting according to one embodiment of the present application, as shown in FIG. 10C.

In Embodiment 10C, EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

As one embodiment, the first coefficient is a positive real number.

As one embodiment, the first transmission occasion is the most recent transmission occasion of the first CSI-RS resource in the first occasion set.

As one embodiment, the first transmission occasion is not the most recent transmission occasion of the first CSI-RS resource in the first occasion set.

As one embodiment, the meaning of the sentence "the first coefficient is related to the first CSI-RS EPRE" comprises: the first coefficient is linearly related to the first CSI-RS EPRE.

As one embodiment, the meaning of the sentence "the first coefficient is related to the first CSI-RS EPRE" comprises: the first coefficient is equal to the ratio of the first CSI-RS EPRE to the EPRE in the first transmission occasion of the first CSI-RS resource.

As one embodiment, the meaning of the sentence "the first coefficient is related to the first CSI-RS EPRE" comprises: the first coefficient is equal to the ratio of a target power control offset to a reference power control offset, the target power control offset is equal to the ratio of the first CSI-RS EPRE to SS/PBCH block EPRE, and the reference power control offset is equal to the ratio of the EPRE in the first transmission occasion of the first CSI-RS resource to the SS/PBCH block EPRE.

As one sub-embodiment of the above embodiment, the target power control offset is indicated by an MAC CE signaling.

As one sub-embodiment of the above embodiment, the target power control offset is indicated by a physical layer signaling.

As one sub-embodiment of the above embodiment, the target power control offset is indicated by a DCI signaling.

As one sub-embodiment of the above embodiment, the target power control offset and the first power control offset are indicated by the same signaling.

As one sub-embodiment of the above embodiment, the target power control offset and the first power control offset are indicated by different signalings.

As one sub-embodiment of the above embodiment, the target power control offset and the first power control offset are indicated by the same DCI signaling.

As one sub-embodiment of the above embodiment, the configuration information of the first CSI-RS resource comprises the reference power control offset.

As one sub-embodiment of the above embodiment, the reference power control offset is indicated by a higher layer parameter, and the name of the higher layer parameter indicating the reference power control offset comprises powerControlOffsetSS.

As one sub-embodiment of the above embodiment, the reference power control offset is indicated by an MAC CE signaling.

As one sub-embodiment of the above embodiment, the reference power control offset is indicated by a physical layer signaling.

As one sub-embodiment of the above embodiment, the reference power control offset is indicated by a DCI signaling.

As one embodiment, the power adjustment is performed by multiplying the channel information obtained based on the measurement of the first transmission occasion by the square root of the first coefficient.

Under the limitations of the above methods or embodiments, how to use the first coefficient to perform power adjustment on the channel information obtained based on the measurement of the first transmission occasion is determined by the manufacturer of the first node independently, or is implementation-related. A typical but non-restrictive implementation is described below:

the first CSI reporting comprises at least a CRI, and the CRI included in the first CSI reporting is used for indicating the first CSI-RS resource, wherein the first CSI-RS resource is one RS resource in the first RS resource set; The first node obtains a channel parameter matrix $\hat{H}_{r \times t}$ for the measurement of the first transmission occasion of the first CSI-RS resource, wherein $r, t$ are the number of receiving antennas and the number of antenna ports of the first CSI-RS resource, respectively; and power adjustment is performed on the channel parameter matrix $\hat{H}_{r \times t}$, and the adjusted channel parameter matrix $\hat{H}_{r \times t}$ is

$\sqrt{Q} \cdot \hat{H}_{r \times t}$ , wherein Q is the first coefficient.

## Embodiment 11A

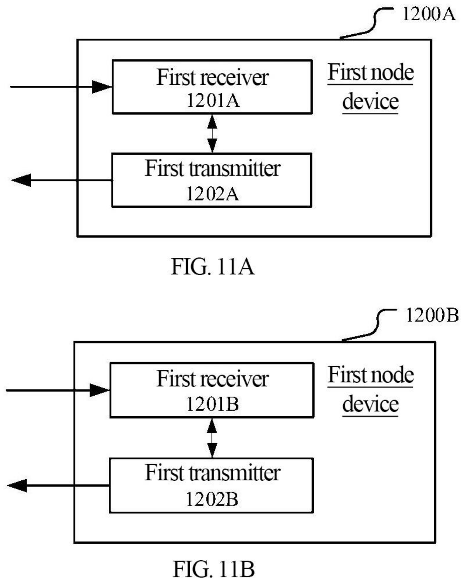

Embodiment 11A illustrates a structural block diagram of a processing apparatus used in a first node device according to one embodiment of the present application, as shown in 11A. In FIG. 11A, a processing apparatus 1200A in the first node device comprises a first receiver 1201A and a first transmitter 1202A.

As one embodiment, the first node device is user equipment.

As one embodiment, the first node device is a relay node device.

As one embodiment, the first receiver 1201A comprises at least one of {the antenna 452, the receiving device 454, the receiving processor 456, the multi-antenna receiving processor 458, the controller/processor 459, the memory 460, and the data source 467} in Embodiment 4.

As one embodiment, the first transmitter 1202A includes at least one of {the antenna 452, the transmitting device 454, the transmitting processor 468, the multi-antenna transmitting processor 457, the controller/processor 459, the memory 460, and the data source 467} in Embodiment 4.

The first receiver 1201A receives a first CSI reporting configuration, wherein the first CSI reporting configuration comprises a first RS resource set, and the first RS resource set comprises one or more RS resources; and receives a first information block, wherein the first information block is used for indicating a first power control offset; and

the first transmitter 1202A sends first CSI reporting;

in Embodiment 11A, a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, there is one CSI-RS resource in the first RS resource set that has EPRE that is different from the first CSI-RS EPRE in at least one transmission occasion of the CSI-RS resource in the first occasion set.

As one embodiment, EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

As one embodiment, the first coefficient is equal to the ratio of a target power control offset to a reference power control offset, the target power control offset is equal to the ratio of the first CSI-RS EPRE to SS/PBCH block EPRE, and the reference power control offset is equal to the ratio of the EPRE in the first transmission occasion of the first CSI-RS resource to the SS/PBCH block EPRE.

As one embodiment, it comprises:

the first receiver 1201A receiving a second information block,
wherein the second information block is used for indicating the target power control offset, and the target power control offset is equal to the ratio of the first CSI-RS EPRE to SS/PBCH block EPRE.

As one embodiment, it comprises:

the first receiver 1201A receiving a third information block,
wherein the third information block is used for indicating the reference power control offset, and the reference power control offset is equal to the ratio of the EPRE in one transmission occasion of the first CSI-RS resource in the first occasion set to the SS/PBCH block EPRE.

As one embodiment, the ratios of EPRE in two transmission occasions respectively of one CSI-RS resource in the first RS resource set to the SS/PBCH block EPRE are respectively indicated.

## Embodiment 11B

Embodiment 11B illustrates a structural block diagram of a processing apparatus used in a first node device according to one embodiment of the present application, as shown in FIG. 11B. In FIG. 11B, the processing apparatus 1200B in the first node device comprises a first receiver 1201B and a first transmitter 1202B.

As one embodiment, the first node device is user equipment.

As one embodiment, the first node device is a relay node device.

As one embodiment, the first receiver 1201B comprises at least one of {the antenna 452, the receiving device 454, the receiving processor 456, the multi-antenna receiving processor 458, the controller/processor 459, the memory 460, and the data source 467} in Embodiment 4.

As one embodiment, the first transmitter 1202B comprises at least one of {the antenna 452, the transmitting device 454, the transmitting processor 468, the multi-antenna transmitting processor 457, the controller/processor 459, the memory 460, and the data source 467} in Embodiment 4.

The first receiver 1201B receives a first CSI reporting configuration, wherein the first CSI reporting configuration comprises a first RS resource set, and the first RS resource set comprises one or more RS resources; and receives a first information block, wherein the first information block is used for indicating a first power control offset; and

> a first transmitter sends first CSI reporting 1202B;
> in Embodiment 11B, a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

As one embodiment, there is one RS resource in the first RS resource set that has EPRE that is different in two transmission occasions of the RS resource in the first occasion set.

As one embodiment, the first CSI reporting indicates the first CSI-RS resource, wherein the first CSI-RS resource is one CSI-RS resource in the first RS resource set; and the first CSI-RS EPRE is equal to the maximum EPRE in all transmission occasions of the first CSI-RS resource in the first occasion set, or the first CSI-RS EPRE is equal to the minimum EPRE in all transmission occasions of the first CSI-RS resource in the first occasion set, or the first CSI-RS EPRE is equal to the average EPRE in all transmission occasions of the first CSI-RS resource in the first occasion set.

As one embodiment, the first CSI reporting indicates a first CSI-RS resource, the first CSI-RS resource is one RS resource in the first RS resource set, and the first CSI-RS EPRE is equal to EPRE in the most recent transmission occasion of the first CSI-RS resource in the first occasion set.

As one embodiment, the first CSI reporting indicates a first CSI-RS resource, the first CSI-RS resource is one RS resource in the first RS resource set, and EPRE in one transmission occasion of the first CSI-RS resource in the first occasion set is different from the first CSI-RS EPRE.

As one embodiment, EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

As one embodiment, it comprises:

> a first receiver 1201B receiving a second information block; receiving a third information block,
> wherein the second information block and the third information block are respectively used for indicating the ratios of EPRE in two transmission occasions respectively of one CSI-RS resource in the first RS resource set to the SS/PBCH block EPRE.

As one embodiment, the first CSI reporting configuration further comprises a second RS resource set, wherein the second RS resource set comprises one or more RS resources; and a second occasion set comprises a transmission occasion of at least one RS resource in the second RS resource set that is not later than the CSI reference resource of the first CSI reporting, and the second occasion set is used for obtaining interference measurement for calculating the first CSI reporting.

## Embodiment 12A

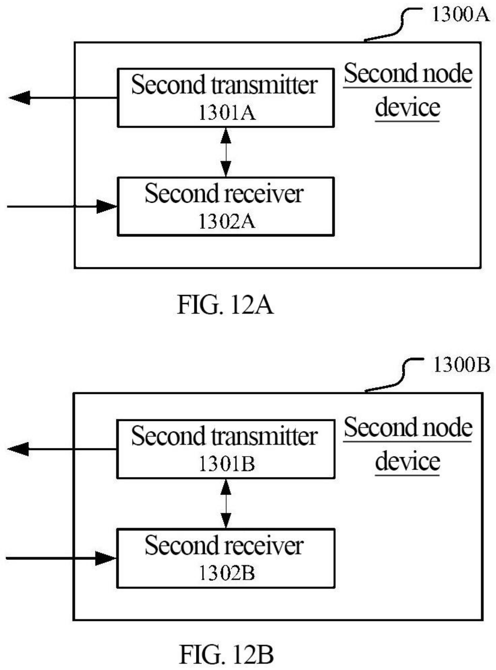

Embodiment 12A illustrates a structural block diagram of a processing apparatus used in a second node device according to one embodiment of the present application, as shown in 12A. In FIG. 12A, a processing apparatus 1300A in the second node device comprises a second transmitter 1301A and a second receiver 1302A.

As one embodiment, the second node device is a base station device.

As one embodiment, the second node device is user equipment.

As one embodiment, the second node device is a relay node device.

As one embodiment, the second transmitter 1301A comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1302A comprises at least one of {the antenna 420, the receiving device 418, the receiving processor 470, the multi-antenna receiving processor 472, the controller/processor 475, and the memory 476} in Embodiment 4.

The second transmitter 1301A sends a first CSI reporting configuration, wherein the first CSI reporting configuration comprises a first RS resource set, and the first RS resource set comprises one or more RS resources; and sends a first information block, wherein the first information block is used for indicating a first power control offset; and

the second receiver 1302A receives first CSI reporting;

in Embodiment 12A, a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

As one embodiment, there is one CSI-RS resource in the first RS resource set that has EPRE that is different from the first CSI-RS EPRE in at least one transmission occasion of the CSI-RS resource in the first occasion set.

As one embodiment, EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

As one embodiment, the first coefficient is equal to the ratio of a target power control offset to a reference power control offset, the target power control offset is equal to the ratio of the first CSI-RS EPRE to SS/PBCH block EPRE, and the reference power control offset is equal to the ratio of the EPRE in the first transmission occasion of the first CSI-RS resource to the SS/PBCH block EPRE.

As one embodiment, it comprises:

a second transmitter 1301A sending a second information block,

wherein the second information block is used for indicating the target power control offset, and the target power control offset is equal to the ratio of the first CSI-RS EPRE to SS/PBCH block EPRE.

As one embodiment, it comprises:

a second transmitter 1301A sending a third information block,

wherein the third information block is used for indicating the reference power control offset, and the reference power control offset is equal to the ratio of the EPRE in one transmission occasion of the first CSI-RS resource in the first occasion set to the SS/PBCH block EPRE.

As one embodiment, the ratios of EPRE in two transmission occasions respectively of one CSI-RS resource in the first RS resource set to the SS/PBCH block EPRE are respectively indicated.

### Embodiment 12B

Embodiment 12B illustrates a structural block diagram of a processing apparatus used in a second node device according to one embodiment of the present application, as shown in FIG. 12B. In FIG. 12B, the processing apparatus 1300B in the second node device comprises a second transmitter 1301B and a second receiver 1302B.

As one embodiment, the second node device is a base station device.

As one embodiment, the second node device is user equipment.

As one embodiment, the second node device is a relay node device.

As one embodiment, the second transmitter 1301B comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1302B comprises at least one of {the antenna 420, the receiving device 418, the receiving processor 470, the multi-antenna receiving processor 472, the controller/processor 475, and the memory 476} in Embodiment 4.

The second transmitter 1301B sends a first CSI reporting configuration, wherein the first CSI reporting configuration comprises a first RS resource set, and the first RS resource set comprises one or more RS resources; and sends a first information block, wherein the first information block is used for indicating a first power control offset; and

the second receiver 1302B receives first CSI reporting;

in Embodiment 12B, a first occasion set comprises a transmission occasion of at least one RS resource in the first RS resource set that is not later than a CSI reference resource of the first CSI reporting, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI-RS EPRE depends on the CSI reference resource of the first CSI reporting.

As one embodiment, there is one RS resource in the first RS resource set that has EPRE that is different in two transmission occasions of the RS resource in the first occasion set.

As one embodiment, the first CSI reporting indicates the first CSI-RS resource, wherein the first CSI-RS resource is one CSI-RS resource in the first RS resource set; and the first CSI-RS EPRE is equal to the maximum EPRE in all transmission occasions of the first CSI-RS resource in the first occasion set, or the first CSI-RS EPRE is equal to the minimum EPRE in all transmission occasions of the first CSI-RS resource in the first occasion set, or the first CSI-RS EPRE is equal to the average EPRE in all transmission occasions of the first CSI-RS resource in the first occasion set.

As one embodiment, the first CSI reporting indicates a first CSI-RS resource, the first CSI-RS resource is one RS resource in the first RS resource set, and the first CSI-RS EPRE is equal to EPRE in the most recent transmission occasion of the first CSI-RS resource in the first occasion set.

As one embodiment, the first CSI reporting indicates a first CSI-RS resource, the first CSI-RS resource is one RS resource in the first RS resource set, and EPRE in one transmission occasion of the first CSI-RS resource in the first occasion set is different from the first CSI-RS EPRE.

As one embodiment, EPRE in a first transmission occasion of the first CSI-RS resource is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

As one embodiment, it comprises:

the second transmitter 1301B sending a second information block; and sending a third information block, wherein the second information block and the third information block are respectively used for indicating the ratios of EPRE in two transmission occasions respectively of one CSI-RS resource in the first RS resource set to the SS/PBCH block EPRE.

As one embodiment, the first CSI reporting configuration further comprises a second RS resource set, wherein the second RS resource set comprises one or more RS resources; and a second occasion set comprises a transmission occasion of at least one RS resource in the second RS resource set that is not later than the CSI reference resource of the first CSI reporting, and the second occasion set is used for obtaining interference measurement for calculating the first CSI reporting.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on the drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base stations or the system devices in the present application include but are not limited to a macrocellular base station, a microcellular base station, a Femtocell, a relay base station, a gNB (NR node B) NR node B, a TRP (Transmitter Receiver Point), and other wireless communication devices.

The above is only a preferred embodiment of the present application and is not used to limit the scope of protection of the present application. Any change and modification made based on the embodiments described in the specification, if similar partial or complete technical effects can be obtained, should be deemed obvious and fall within the protection scope of the present invention.

**Claims**

1.  A first node device used for wireless communication, comprising:

    a first receiver receiving a first CSI reporting configuration, wherein the first CSI reporting configuration comprises a first RS resource set, and the first RS resource set comprises one or more RS resources; and receiving a first information block, wherein the first information block is used for indicating a first power control offset; and
    a first transmitter sending first CSI reporting,
    wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

2.  The first node device according to claim 1, wherein there is one CSI-RS resource in the first RS resource set that has EPRE that is different from the first CSI-RS EPRE in at least one transmission occasion of the CSI-RS resource in the first occasion set.

3.  The first node device according to claim 1 or 2, wherein EPRE of the first CSI-RS resource in a first transmission occasion is different from the first CSI-RS EPRE, and the first transmission occasion is one transmission occasion of the first CSI-RS resource in the first occasion set; and channel information obtained based on measurement of the first transmission occasion is used for calculating the first CSI reporting after power adjustment is performed by using a first coefficient, and the first coefficient is related to the first CSI-RS EPRE.

4.  The first node device according to claim 3, wherein the first coefficient is equal to a ratio of a target power control offset to a reference power control offset, the target power control offset is equal to a ratio of the first CSI-RS EPRE to SS/PBCH block EPRE, and the reference power control offset is equal to a ratio of the EPRE of the first CSI-RS resource in the first transmission occasion to the SS/PBCH block EPRE.

5.  The first node device according to any one of claims 1 to 4, comprising:

    receiving a second information block,
    wherein the second information block is used for indicating the target power control offset, and the target power control offset is equal to the ratio of the first CSI-RS EPRE to the SS/PBCH block EPRE.

6.  The first node device according to any one of claims 1 to 5, comprising:

    receiving a third information block,
    wherein the third information block is used for indicating the reference power control offset, and the reference power control offset is equal to a ratio of the EPRE in one transmission occasion of the first CSI-RS resource in the first occasion set to the SS/PBCH block EPRE.

7.  The first node device according to any one of claims 1 to 6, wherein ratios of EPRE in two transmission occasions of one CSI-RS resource in the first RS resource set respectively to the SS/PBCH block EPRE are respectively indicated.

8.  A second node device used for wireless communication, comprising:

    a second transmitter sending a first CSI reporting configuration, wherein the first CSI reporting configuration comprises a first RS resource set, and the first RS resource set comprises one or more RS resources; and sending a first information block, wherein the first information block is used for indicating a first power control offset; and
    a second receiver receiving first CSI reporting,

wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

9.  A method used in a first node for wireless communication, comprising:

    receiving a first CSI reporting configuration, wherein the first CSI reporting configuration comprises a first RS resource set, and the first RS resource set comprises one or more RS resources;
    receiving a first information block, wherein the first information block is used for indicating a first power control offset; and
    sending first CSI reporting,
    wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

10. A method used in a second node for wireless communication, comprising:

    sending a first CSI reporting configuration, wherein the first CSI reporting configuration comprises a first RS resource set, and the first RS resource set comprises one or more RS resources;
    sending a first information block, wherein the first information block is used for indicating a first power control offset; and
    receiving first CSI reporting,
    wherein a first occasion set comprises at least one transmission occasion of at least a first CSI-RS resource in the first RS resource set that is not later than a CSI reference resource of the first CSI reporting, the first CSI-RS resource is one CSI-RS resource in the first RS resource set, and the first occasion set is used for obtaining channel measurement for calculating the first CSI reporting; in the calculation of the first CSI reporting, a ratio of PDSCH EPRE to first CSI-RS EPRE is equal to the first power control offset; and the first CSI reporting indicates the first CSI-RS resource, and EPRE in one transmission occasion of the first CSI-RS resource in the first occasion set is different from the first CSI-RS EPRE.

100A

First node

Receive a first CSI reporting configuration — 101A

Receive a first information block — 102A

Send first CSI reporting — 103A

FIG. 1A

100B

First node

Receive a first CSI reporting configuration — 101B

Receive a first information block — 102B

Send first CSI reporting — 103B

FIG. 1B

5GS/EPS 200

NG-RAN
202

HSS/UDM  220

UE  201

NR Node B  203

MME/AMF/SMF  211

Other MME/AMF/SMF  214

UE  241

Other NR Node B  204

S-GW/UPF  212

P-GW/UPF  213

Internet service  230

5GC/EPC
210

FIG. 2

Control plane
300

L3

RRC  306

L2

PDCP  304

305

RLC  303

MAC  302

L1

PHY  301

User plane
350

SDAP  356

355

L2

PDCP  354

RLC  353

MAC  352

L1

PHY  351

FIG. 3

FIG. 4

FIG. 5A

N02B. Second node | U01B. First node

S5201B. Send a first CSI reporting configuration

First CSI reporting configuration →

S5101B. Receive the first CSI reporting configuration

S5202B. Send a first information block

First information block →

S5102B. Receive the first information block

S5203B. Send a second information block

Second information block →

S5103B. Receive the second information block

F1B

S5204B. Send a third information block

Third information block →

S5104B. Receive the third information block

F2B

S5105B. Send first CSI reporting

← First CSI reporting

S5205B. Receive the first CSI reporting

End | End

FIG. 5B

EPRE in at least one transmission
occasion of the CSI-RS resource
There is one CSI-RS resource     in the first occasion set
in the first RS resource set   ─────────────────────►   Is different from the first CSI-RS EPRE

FIG. 6A

There is one RS resource    In the first occasion set
in the first RS resource set   ─────────────────────►   EPRE in two transmission occasions
of the RS resource is different

FIG. 6B

EPRE in a first transmission   Is different from
occasion of the first
CSI-RS resource   ─────────────────────►   The first CSI-RS EPRE

Channel information     After power adjustment is performed
obtained based on       by using a first coefficient
measurement of the first                                    Is used for calculating the first
transmission occasion   ─────────────────────►   CSI reporting

The first coefficient is related to the first CSI-RS EPRE

FIG. 7A

The first CSI-RS EPRE = The maximum EPRE in all transmission occasions of the first
CSI-RS resource in the first occasion set

FIG. 7B

The first CSI-RS EPRE = The minimum EPRE in all transmission occasions of the first
CSI-RS resource in the first occasion set

FIG. 7C

The first CSI-RS EPRE = The average EPRE in all transmission occasions of the first
CSI-RS resource in the first occasion set

FIG. 7D

$$\text{The first coefficient} = \frac{\text{Target power control offset}}{\text{Reference power control offset}}$$

$$\text{The target power control offset} = \frac{\text{The first CSI-RS EPRE}}{\text{SS/PBCH block EPRE}}$$

$$\text{The reference power control offset} = \frac{\text{EPRE in the first transmission occasion of the first CSI-RS resource}}{\text{SS/PBCH block EPRE}}$$

FIG. 8A

The first CSI-RS EPRE  =  EPRE in the most recent transmission occasion of the first CSI-RS resource in the first occasion set

FIG. 8B

The ratios of EPRE in two transmission occasions respectively of one CSI-RS resource in the first RS resource set to the SS/PBCH block EPRE

Respectively
→ Indicated

FIG. 9A

EPRE in one transmission occasion of the first CSI-RS resource in the first occasion set

Is different from
→ The first CSI-RS EPRE

FIG. 9B

The first CSI reporting configuration —— Further comprises ——→ Second RS resource set

Second occasion set —— Comprises ——→ At least one transmission occasion of at least one RS resource in the second RS resource set that is not later than the CSI reference resource of the first CSI reporting

The second occasion set —— Is used for obtaining ——→ Interference measurement for calculating the first CSI reporting

FIG. 10A

The first CSI reporting configuration —— Further comprises ——→ Second RS resource set

Second occasion set —— Comprises ——→ A transmission occasion of at least one RS resource in the second RS resource set that is not later than the CSI reference resource of the first CSI reporting

The second occasion set —— Is used for obtaining ——→ Interference measurement for calculating the first CSI reporting

FIG. 10B

EPRE in a first transmission occasion of the first CSI-RS resource —— Is different from ——→ The first CSI-RS EPRE

Channel information obtained based on measurement of the first transmission occasion —— After power adjustment is performed by using a first coefficient ——→ Is used for calculating the first CSI reporting

The first coefficient is related to the first CSI-RS EPRE

FIG. 10C

1200A

First receiver
1201A

First node
device

First transmitter
1202A

FIG. 11A

1200B

First receiver
1201B

First node
device

First transmitter
1202B

FIG. 11B

1300A

Second node device

Second transmitter
1301A

Second receiver
1302A

FIG. 12A

1300B

Second node device

Second transmitter
1301B

Second receiver
1302B

FIG. 12B

## INTERNATIONAL SEARCH REPORT

| International application No. |
| --- |
| **PCT/CN2024/080247** |

**A. CLASSIFICATION OF SUBJECT MATTER**

H04W24/10(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

3GPP, CNTXT, ENTXT: EPRE, 功率, 控制, 偏移, 功控, 时机, 不晚于, 比, PDSCH, SS, PBCH, CSI, CQI, 配置, 上报, power, control, offset, powercontroloffset, powercontroloffsetss, Pc-SS, occasion, ratio, config, report, no later

**C. DOCUMENTS CONSIDERED TO BE RELEVANT**

| Category* | Citation of document, with indication, where appropriate, of the relevant passages | Relevant to claim No. |
| --- | --- | --- |
| X | 3GPP TSG RAN. "NR; Physical layer procedures for data (Release 17)" *3GPP TS 38.214 V17.4.0*, 04 January 2023 (2023-01-04), sections 5.2.1, 5.2.2.3, and 5.2.2.5 | 1-2, 5, 8-10 |
| A | CN 114731193 A (LG ELECTRONICS INC.) 08 July 2022 (2022-07-08) entire document | 1-10 |
| A | CN 111212477 A (BEIJING SAMSUNG TELECOM R&D CENTER et al.) 29 May 2020 (2020-05-29) entire document | 1-10 |
| A | CN 110050427 A (HUAWEI TECHNOLOGIES CO., LTD.) 23 July 2019 (2019-07-23) entire document | 1-10 |
| A | CN 115699943 A (QUALCOMM INC.) 03 February 2023 (2023-02-03) entire document | 1-10 |
| A | WO 2022077434 A1 (ZTE CORP.) 21 April 2022 (2022-04-21) entire document | 1-10 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 May 2024** | **22 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/080247** |

| Patent document cited in search report | | | Publication date (day/month/year) | Patent family member(s) | | | Publication date (day/month/year) |
| --- | --- | --- | --- | --- | --- | --- | --- |
| CN | 114731193 | A | 08 July 2022 | US | 2022239358 | A1 | 28 July 2022 |
| | | | | US | 2024056154 | A1 | 15 February 2024 |
| | | | | JP | 2023508964 | A | 06 March 2023 |
| | | | | EP | 4106220 | A1 | 21 December 2022 |
| | | | | WO | 2021162517 | A1 | 19 August 2021 |
| | | | | US | 2023087177 | A1 | 23 March 2023 |
| | | | | KR | 20220050936 | A | 25 April 2022 |
| CN | 111212477 | A | 29 May 2020 | KR | 20170018046 | A | 15 February 2017 |
| | | | | US | 2017134130 | A1 | 11 May 2017 |
| | | | | EP | 3155855 | A1 | 19 April 2017 |
| | | | | JP | 2017526207 | A | 07 September 2017 |
| | | | | US | 2019109690 | A1 | 11 April 2019 |
| | | | | WO | 2015190847 | A1 | 17 December 2015 |
| | | | | CN | 105471552 | A | 06 April 2016 |
| | | | | IN | 201737000511 | A | 05 May 2017 |
| CN | 110050427 | A | 23 July 2019 | CA | 3035020 | A1 | 17 May 2019 |
| | | | | EP | 3504819 | A1 | 03 July 2019 |
| | | | | US | 2019281487 | A1 | 12 September 2019 |
| | | | | JP | 2020501386 | A | 16 January 2020 |
| | | | | US | 2023422073 | A1 | 28 December 2023 |
| | | | | BR | 112019007177 | A2 | 26 May 2020 |
| | | | | WO | 2019099857 | A1 | 23 May 2019 |
| | | | | US | 2022369148 | A1 | 17 November 2022 |
| | | | | VN | 65604 | A | 25 September 2019 |
| | | | | BR | 112019007177 | A2 | 26 May 2020 |
| | | | | IN | 201937006372 | A | 02 October 2020 |
| | | | | CN | 112803980 | A | 14 May 2021 |
| CN | 115699943 | A | 03 February 2023 | EP | 4162750 | A1 | 12 April 2023 |
| | | | | WO | 2021252212 | A1 | 16 December 2021 |
| | | | | US | 2021385814 | A1 | 09 December 2021 |
| | | | | IN | 202227059637 | A | 25 November 2022 |
| WO | 2022077434 | A1 | 21 April 2022 | US | 2023246893 | A1 | 03 August 2023 |
| | | | | CA | 3198448 | A1 | 21 April 2022 |
| | | | | EP | 4211926 | A1 | 19 July 2023 |
| | | | | KR | 20230068434 | A | 17 May 2023 |
| | | | | TW | 202142026 | A | 01 November 2021 |
| | | | | CN | 116508344 | A | 28 July 2023 |

Form PCT/ISA/210 (patent family annex) (July 2022)